# EUROPÄISCHE PATENTSCHRIFT

(11) **EP 2 433 906 B1**
(45) Veröffentlichungstag und Bekanntmachung des Hinweises auf die Patenterteilung: **15.06.2016**
(21) Anmeldenummer: 11008696.4
(22) Anmeldetag: 10.08.2007
(51) Int. Cl.: A47J 31/60, C02F 1/00, C02F 1/28

(54) **Wasserfilterpatrone**
Water filter cartridge
Cartouche de filtre à eau

(30) Priorität: 10.08.2006 DE 102006037636
(43) Veröffentlichungstag der Anmeldung: 28.03.2012
(62) Teilanmeldung aus: 07818019.7
(73) Patentinhaber: Aquis Wasser-Luft-Systeme GmbH, Lindau, 9445 Rebstein (CH)
(72) Erfinder: Wallerstorfer, Kurt, 5204 Strasaswalchen (AT); Wawrla, Andreas, 9443 Widnau (CH); Scholz, Roland, 9436 Balgach (CH)
(74) Vertreter: Otten, Roth, Dobler & Partner mbB Patentanwälte

(56) Entgegenhaltungen:
- EP-A1- 1 510 503
- WO-A1-2006/050114
- WO-A2-02/13944
- DE-A1-102004 049 876
- GB-A- 2 346 568

## Beschreibung

Die Erfindung betrifft eine Wasserfilterpatrone nach dem Oberbegriff des Anspruchs 1.

In verschiedenen Küchengeräten und Maschinen, beispielsweise in Wasserfilterkannen, Wasserkochern, Kaffee- oder Espressomaschinen wird ein Wassertank zur Bevorratung einer Flüssigkeit, im Falle von Küchengeräten, Kaffee- oder Espressomaschinen zur Bevorratung von Wasser, vorgesehen, wobei eine Filterpatrone in den Tank einsetzbar ist, um das Wasser vor der Verarbeitung in der Maschine oder vor der Konsumierung aufzubereiten. Bekannte Filterpatronen weisen im unteren Bereich einen Auslass auf, durch den das Wasser der zugehörigen Maschine oder einem Speicher- oder Aufbewahrungsgefäß zugeführt wird. Hierbei wird das Wasser über ein vorzugsweise gravimetrisch betriebenes Filterbett geleitet und gelangt über einen Anschluss der Filterpatrone an einen entsprechenden Anschluss des Wassertanks in die Maschine oder ein anderweitiges Sammel- und Aufbewahrungsgefäß.

Für einen zuverlässigen Betrieb der Küchengeräte und Maschine ist es von großer Bedeutung, dass eine in ihren Filterparametern definierte Filterpatrone verwendet wird. Durch eine mangelhafte Filterpatrone wird unzureichend oder falsch aufbereitetes Wasser produziert, was zu negativen Auswirkungen, beispielsweise ungenügende Geschmacks- und/oder Geruchsoptimierung, Kalkreduzierung oder dergleichen, bis hin zu Maschinendefekten führen kann. Die Maschinensteuerung ist z.B. nicht in der Lage, rechtzeitig die vorgesehenen Wartungsintervalle einzuleiten, wenn sie von einer Filterpatrone des korrekten Typs ausgeht, diese jedoch tatsächlich nicht verwendet wird. Bei der Verwendung ungenügender Filterpatronen kommt es zu Problemen nicht nur in der Betriebssicherheit der Maschine, sondern auch in Fragen der Gewährleistung usw. Es ist daher von großer Bedeutung, sicherzustellen, dass stets nur zugelassene Filterpatronen zum Einsatz kommen.

Im Stand der Technik offenbart die GB 2 346 568 A eine Vorrichtung zur Aufbereitung von Flüssigkeiten mittels einer Filterkartusche, die ein an die Unterseite eines Rohwassertanks anschließbares, filterseitiges Tankanschlusselement mit rotationsunsymmetrischem Querschnitt als Verdrehsicherung aufweist. Dadurch sollen abriebsbedingte Schäden an Dichtelementen verhindert werden. Aus der DE 10 2004 049 876 A1 ist eine Filterkartusche bekannt, welche mittels eines die Auslassöffnung scheibenartig umschließenden, elastisch zwischen zwei stabilen Ausrichtungen - nach innen geklappt bzw. nach außen geklappt - an einem zylinderförmigen, tankseitigen Sitzelement fixiert werden kann, sodass ein Aufschwimmen der Filterkartusche verhindert werden soll.

Die Erfindung hat daher die Aufgabe, sicherzustellen, dass bei Küchengeräten und Maschinen mit Wassertank zur Bevorratung von Wasser nur der zugelassene Filtertyp zum Einsatz kommt.

Die Lösung dieser Aufgabe erfolgt ausgehend vom Oberbegriff des Anspruchs 1 durch dessen kennzeichnende Merkmale. In den abhängigen Ansprüchen sind vorteilhafte und zweckmäßige Weiterbildungen angegeben.

Eine erfindungsgemäße Wasserfilterpatrone umfasst ein filterausgangsseitiges Anschlusselement, das zum Anschluss an eine komplementär ausgebildete Anschlussstruktur eines Wassertanks vorgesehen ist. Die Wasserfilterpatrone zeichnet sich dadurch aus, dass dieses filterausgangsseitige Anschlusselement eine als Dichtfläche ausgebildete innere Umfangsfläche mit polygonförmiger Kontur aufweist, die sich beim Aufstecken der Filterpatrone flächig anschmiegt. Diese polygonförmige Kontur stellt somit ein Kodierungs- bzw. Verschlüsselungselement dar, welches sicherstellt, dass die Filterpatrone funktionstüchtig nur mit einer entsprechend komplementären, ebenfalls polygonförmig ausgebildeten Anschlussstruktur verbunden werden kann.

Insbesondere vorteilhaft ist es hierbei, wenn die beiden komplementären, polygonförmigen Anschlussstrukturen bei eingesetzter Filterpatrone in Dichtwirkung zueinander stehen. Die Dichtwirkung kann dabei vorzugsweise durch eine Formschlussdichtung zwischen diesen beiden polygonförmigen Anschlusselementen erzeugt werden. Aber auch die Verwendung einer körperlich eigenständig ausgebildeten Dichtung kann zusätzlich und/oder alternativ in vorteilhafter Weise vorgesehen sein. Zur Erzielung der Dichtwirkung kann eine in Bezug auf eine durch das filterseitige Anschlusselement verlaufende Längsachse axial und/oder radial und/oder auch in einem Winkel zu dieser Achse ausgerichtete Dichtfläche vorgesehen sein.

Neben dieser die beiden Wasserbereiche trennenden Funktion in der Form einer Abdichtung zwischen einem Bereich für das durch die Filterpatrone zu filternde Rohwasser und dem Bereich, in dem das von der Filterpatrone gefilterte Wasser aus deren Auslauf zur weiteren Verwendung austritt, ist dieses polygonförmige Anschlusselement der Filterpatrone gleichzeitig auch als Fixiermittel zur Festsetzung der Filterpatrone ausgebildet. Gegebenenfalls können auch noch ergänzende Kodier- und/oder Fixierstrukturen an der Wasserfilterpatrone vorgesehen sein, die mit entsprechend komplementären Kodier- und/oder Fixierstrukturen am zum filterseitigen Anschlusselement komplementären Anschlusselement eines Tanks oder eines Anschlusskopfes vorgesehen sein.

Das Anschlusselement der Filterpatrone kann je nach Ausführungsform sowohl als Vorsprung als auch als Ausnehmung ausgebildet sein, die dementsprechend mit der komplementären Anschlussstruktur durch Drüberstecken verbunden werden kann, wobei in bevorzugter Weise jeweils eine innere Umfangsfläche mit polygoner Kontur der Wasserfilterpatrone mit einer äußerenumfangsfläche mit polygoner Kontur des komplementären Anschlussstückes dichtend gegeneinander anliegen.

Zusätzlich ist aber auch eine stirnseitige Abdichtung zwischen einem eine polygonförmige Kontur aufweisenden Anschlusselement der Wasserfilterpatrone und einem komplementären Anschlusselement zur Aufnahme der Wasserfilterpatrone möglich, vorzugsweise durch die Ausbildung entsprechend planer stirnseitiger Kontaktflächen, gegebenenfalls auch unterstützt durch eine dazwischen angeordnete Dichtung, die z.B. aus einem elastischen Material hergestellt sein kann.

Als weitere Kodiermöglichkeit können an einem solchen Anschlusselement der Wasserfilterpatrone auch noch axial und/oder radial ausgerichtete zusätzliche Kodierstrukturen vorgesehen sein, die z.B. ebenfalls in der Form von Vorsprüngen und/oder Ausnehmungen ausgebildet sein können. Bei der Verwendung einer Dichtung zwischen einem derart kodierten, filterseitigen Anschlusselement und einem entsprechend komplementär kodierten Gegenstück ist vorzugsweise auch die Dichtung mit solchen zusätzlichen Kodierstrukturen versehen.

Das zum oben beschriebenen filterseitigen Anschlusselement komplementäre Anschlusselement zur Aufnahme der Wasserfilterpatrone kann z.B. an einem zur Aufnahme von zu filternden Wasser vorgesehenen Wassertank ausgebildet sein. Dieser Wassertank kann einen Auslass für die direkte Abgabe des zu filternden Wassers aufweisen, er kann aber auch als Tank für ein wasserführendes Gerät ausgebildet sein, wie insbesondere Haushaltsgeräte, wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und konditionierer oder dergleichen, wobei vorzugsweise auch ein Sauganschluss am Tank zum Ansaugen von Wasser aus dem Wassertank mit Mitteln zur Erzeugung eines Unterdrucks vorgesehen sein kann.

Unter einem Tank wird neben einem zum Wasserspeichern vorgesehenen Gefäß auch jede andere einen für den Betrieb der Filterpatrone ausreichenden hydrostatischen Druck erzeugende Vorrichtung verstanden, wie z.B. eine offene und/oder geschlossene Fließstrecke.

Nachfolgend wird zur Erläuterung weiterer Details ein Tank mit einem entsprechend angeschlossenen Filterelement als eine bevorzugte Ausführungsform näher beschrieben.

Demgemäß zeichnet sich ein Tank für wasserführende Geräte mit einem Filteranschluss zum Anschluss einer Filterkatusche am Tank dadurch aus, dass durch die Formgebung des Umfangs des tankseitigen Filteranschlusses eine Kodierungsstruktur insbesondere dadurch realisiert wird, dass der Filteranschluss des Tanks eine Umfangskontur in Form eines Polygonzugs aufweist, an den sich die Dichtung der Wasserfilterpatrone beim Aufstecken der Filterpatrone flächig anschmiegt. Hierdurch kann einerseits der Einsatz einer nicht zum Tank korrespondierenden Filterkartusche ausgeschlossen werden, und andererseits durch eine formschlüssige Anlage eines komplementären, filterseitigen Anschlusselements auch eine Abdichtung zwischen tankseitigem und filterseitigem Anschluss realisiert werden.

Vorzugsweise befindet sich der tankseitige Filteranschluss im Inneren des Tanks. Je nach Anwendungsfall kann der tankseitige Filteranschluss aber auch außen am Tank vorgesehen sein, was beispielsweise hinsichtlich der Montage und/oder der Hygiene vorteilhaft sein kann.

Unter einem solchen tankseitigem Filteranschlusselement sind alle direkt und/oder indirekt am Tank angeordnete und/oder ausgebildete Elemente zu verstehen, wie vorstehende und/oder vertiefte Aufnahme- und/oder Fixier- und/oder Kodier- und/oder Dichtelemente. Diese können z.B. als fest mit dem Tank verbundene oder verbindbar ausgebildete Ausschlussstutzen, als Haken, Ösen, Adapter oder dergleichen ausgebildet sein.

Der tankseitige Filteranschluss ist hierbei vorzugsweise im Bodenbereich des Tanks ausgebildet. Er kann durchaus aber auch wenigstens teilweise oder auch vollständig in einer Ecke und/oder an einer Seitenwand des Tanks angeordnet sein, je nach dem an welcher Stelle der Anschluss zwischen dem Wassertank und einer geräteseitigen Abflussleitung vorgesehen ist. Zum Beispiel ist auch ein in einem vom Boden des Tanks in dessen betriebsmäßiger Einbaulage nach oben hin beabstandet aus dem Tank herausgeführtes tankseitiges Filteranschlusselement denkbar.

Durch solche Ausführungsformen kann z.B. ein kannen- und/oder schubladenarziger Tank realisiert werden, in welchem wiederum nur eine mit einem entsprechenden kodierten filterseitigen Tankanschlusselement versehene Filterpatrone eingesetzt werden kann. Die geräteseitige Verbindung des Tankanschlusses kann sowohl bei diesem als auch bei den vorbeschriebenen Ausführungsformen als Steckanschluss an ein entsprechend komplementäres geräteseitige Tankanschlusselement angeschlossen werden. Das vom Tankboden beabstandete tankseitige Filteranschlusselement kann beispielsweise auch als an einer Tankwand einhängbares Filteranschlusselement ausgebildet sein, z.B. in der Form einer Rohrleitung, die bei eingesetzter Patrone mit entsprechend passender Kodierung zur Ausleitung des in den Tank eingefüllten und durch die Filterpatrone gefilterten Rohwassers dient.

Bei entsprechend tiefliegender Anordnung der Wassereintrittsöffnungen für die Filterstrecke kann auch mit einer derartigen Ausführungsform der wesentliche Inhalt des Tanks entleert werden, so dass dieser keine oder nur eine geringe Menge an nicht durch die Filterstrecke führbares Todwasser aufweist.

Die Strukturen am Filteranschluss des Tanks müssen somit nach einem Schlüssel-Schlossprinzip mit entsprechenden Anschlussstrukturen einer Filterpatrone wechselwirken, damit die Filterpatrone funktionsfähig in den Wassertank einsetzbar ist. Ein Maschinen- bzw. Tankhersteller kann auf diese Weise dafür Sorge tragen, dass nur Filterpatronen zum Einsatz kommen, die einen zuverlässigen Betrieb der Maschine gewährleisten. Der Unterdruck zum Absaugen kann beispielsweise über eine Saugpumpe erzeugt werden.

Der Filteranschluss des Tanks und ein Anschlussstutzen der Filterpatrone sind so ausgebildet, dass diese einander umschließen. Hierbei sind beispielsweise zusätzlich zu den Kodierungsstrukturen in idealer Weise auch radiale und/oder formschlüssige Dichtstrukturen in unterschiedlichen realisiert.

Kodierungsstrukturen können grundsätzlich auch als Betätigungsorgane im Bereich des Tankanschlusses herangezogen werden. So kann beispielsweise ein am Tank angebrachter Schaltmechanismus mit den Kodierungsstrukturen der Filterpatrone betätigt werden, der zur Signalisierung des korrekten Sitzes der Filterpatrone oder zur Erkennung des richtigen Typs von Patrone durch das zugehörige Gerät dienen kann. Eine solche Ausgestaltung der Kodierungselemente als Betätigungsorgan ist unter anderem in Verbindung mit allen Arten von Kodierungsstrukturen möglich.

So ist es beispielsweise auch möglich Doppel-Bajonette oder Mehrfach-Bajonette auszubilden, wobei sich diese Doppel- bzw. Mehrfach-Struktur sowohl in Draufsicht auf die Umfangsfläche eines entsprechenden Anschlusselementes beziehen kann, als auch auf deren Längserstreckung. Bezogen auf die Draufsicht auf die Umfangsfläche können hierbei auch unterschiedlich beabstandete Winkelanordnungen zwischen einzelnen und oder mehreren Doppel- oder Mehrfach-Bajonettelementen realisiert werden. Dadurch kann entsprechend der jeweils ausgebildeten, komplementären Bajonettelemente eine Verschlüsselung für unterschiedlich aufgebaute Bajonettstrukturen erreicht werden, wobei jeweils in einer ersten oder zweiten oder auch einer weiteren Ebene eine Bajonettverbindung vollständig vorgesehen sein kann oder auch kein Durchlass für ein an einer nicht richtig kodierten Filterpatrone vorgesehenes Bajonettelement, so dass ein betriebsgemäßes Einsetzen dieser Patrone verhindert wird.

Eine polygone Formgebung ermöglicht darüber hinaus eine weitergehende Winkelkodierung für verschiedene Einsatzwinkelpositionen der Filterpatrone.

Vorzugsweise wird zu diesem Zweck eine drehsymmetrische Umfangskontur am Filteranschlusselement vorgesehen. Mit Hilfe einer drehsymmetrischen Ausgestaltung sind verschiedene, vorbestimmte Winkelpositionen beim Einsetzen einer Filterpatrone realisierbar, denen bei Bedarf eine Zusatzfunktion je nach Winkelposition zugeordnet werden kann. Ein Beispiel für eine Umfangsform des tankseitigen Filteranschlusselementes nach den oben beschriebenen Ausführungsbeispielen wäre beispielsweise mit einer Sechskant-Querschnittskontur gegeben. Eine solche Kontur lässt z. B. sechs verschiedene Winkelpositionen einer dazu korrespondierenden Filterpatrone zu. Denkbar sind aber auch andere Polygonformen, wie z. B. Dreikant, Vierkant, Fünfkant, Siebenkant, Achtkant oder dergleichen mehr, im Grunde also alle ungeradzahligen und/oder geradzahligen Polygonformen.

Das tankseitige Filteranschlusselement kann dabei als Ausnehmung mit einem entsprechenden Innenumfang und/oder Außenumfang oder auch als Vorsprung mit entsprechendem Innenumfang und/oder Außenumfang ausgebildet sein. Ein Anschlussstutzen kann dementsprechend zum Aufstecken eines korrespondierenden Anschlusselementes der Filterpatrone am Außenumfang mit der entsprechenden Umfangskontur versehen sein.

Vorteilhafterweise wird die so geformte Umfangsfläche zugleich als Dichtfläche ausgebildet. Auf diese Weise ist sichergestellt, dass nur eine Filterpatrone mit dazu korrespondierender Form der Dichtung für die Filterausgangsleitung funktionsfähig in den Tank eingesetzt und am tankseitigen Filteranschlusselement angeschlossen werden kann. Die Dichtung kann somit in vorteilhafter Weise aus dem gleichen Material wie das Patronengehäuse hergestellt werden, vorzugsweise angespritzt. Der gleiche Effekt kann auch durch eine stirnseitige Kodierung und/oder Dichtung erfolgen, z.B. durch eine gezahnte, gestufte, gewellte oder dergleichen unebene, stirnseitige Anlagefläche zwischen tankseitigem und filterseitigem Anschlusselement, gegebenenfalls auch in Kombination mit weiteren Kodierungsstrukturen.

Eine Umfangsfläche, die wie oben beschrieben geformt ist, kann auch als Halterung für die Filterpatrone verwendet werden, die mit einem entsprechend geformten Halterungselement im Tankbereich korrespondiert. Auch in diesem Fall ist durch die Umfangsfläche eine Kodierungsstruktur realisiert.

Die Kodierungsstruktur, insbesondere die Umfangsfläche des tank- und/oder filterseitigen Anschlusselementes kann, da sie zugleich die Dichtfläche bildet, eine in axialer Richtung sich erstreckende Querschnittsverjüngung, z.B. nach Art eines Pyramidenstumpfs aufweisen. Hierdurch wird ein leichteres, dichtes Aufstecken ohne größere Reibungskräfte ermöglicht.

Auf Seiten der Filterpatrone sind, wie bereits mehrfach angesprochen, die entsprechenden Kodierungsstrukturen vorzusehen, die mit den tankseitigen Kodierungsstrukturen korrespondieren. Die Dichtfläche des tankseitigen Filteranschlusses ist in die Formgebung der Kodierungsstrukturen eingeschlossen und das filterseitige Tankanschlusselement mit der entsprechenden Formgebung versehen. So ist beispielsweise im Falle eines sechskantförmigen Querschnitts des tankseitigen Filteranschlusselementes die Möglichkeit gegeben, als Gegenstück eine entsprechend sechskantförmige Dichtung vorzusehen. Diese ist als Radialdichtung ausgeführt, die auf einen ebenso geformten Vorsprung aufgesteckt wird.

Im Falle einer Querschnittsverjüngung wie oben angeführt wird dabei auch die Dichtung entsprechend angepasst, so dass sie sich beim Aufstecken auf einen z.B. als Sechskant-Pyramidenstumpf ausgebildeten Vorsprung flächig anschmiegt.

In dieser Ausgestaltung ist nur eine Filterpatrone mit entsprechend geformter Dichtung funktionsfähig einsetzbar. Darüber hinaus können in Kombination mit dieser und/oder einer der zuvor beschriebenen Ausführungsformen durchaus noch weitere Kodierungsstrukturen, z. B. in axialer Richtung wirkende Vorsprünge und/oder Ausnehmungen gegebenenfalls auch mit Dichtwirkung vorgesehen werden. Axial können z.B. sägezahnförmige, gestufte, gewellte und/oder dergleichen mehr strukturierte, stirnseitige Konturen vorgesehen werden.

In einer Weiterbildung der Erfindung können auch zwei oder mehrere unterschiedliche Kodierungsstrukturen vorgesehen werden. So kann beispielsweise in Kombination mit einer Kodierung des Anschlusses wie vorbeschrieben zusätzlich ein Fixierungsmittel vorgesehen werden, mit dem die Filterpatrone positionierbar ist, wobei in diesem Fixierungsmittel weitere Kodierungsstrukturen untergebracht werden können. So kann beispielsweise eine Kodierung über die Dichtfläche wie vorbeschrieben kombiniert werden mit einer separat davon angeordneten Vorrichtung zur Fixierung und/oder zusätzlichen Kodierung. Eine solche Fixierung kann im Innenbereich der Filterpatrone und/oder aber auch im Außenbereich der Filterpatrone vorgenommen werden.

In einer besonderen Ausführungsform, werden vom Boden des Tanks abstehende, am Außenumfang der Filterpatrone angreifende Fixierungsmittel vorgesehen, die zusätzlich eine Kodiereigenschaft haben können. So kann beispielsweise über derartige Elemente ein Verrasten oder Einklipsen der Filterpatrone in entsprechenden Rast- oder Klipselementen erfolgen, die gegebenenfalls ebenfalls als Kodierstruktur ausgebildet sein können.

Eine weitere Kodiermöglichkeit des Tank-Filteranschlusses besteht, durch die Veränderung der Ausrichtung der durch das filterseitigen Tankanschlusselement verlaufenden Längsachse gegenüber einer durch das Filtergehäuse verlaufenden Längsachse, so dass diese zueinander beispielsweise einen bestimmten, insbesondere spitzen Winkel ausbilden. Hierzu kann das filterseitigen Tankanschlusselement gegenüber dem Patronengehäuse vorzugsweise leicht geknickt ausgebildet sein. Patronen, die kein in ihrer Lage derart abgeknickt ausgerichtetes Anschlusselement aufweisen, können in einem entsprechend eng ausgebildeten Wassertank nicht funktionstüchtig eingesetzt werden. Ein weiterer Vorteil einer solchen Kodierung liegt darin, dass damit auch gewölbte und/oder gebogen ausgebildete Wassertanks mit vergleichsweise großer Längserstreckung betriebssicher und zuverlässig bestückbar sind, da durch die Abwinkelung der beiden Längsachsen zueinander eine entsprechend zuverlässig dichtende und fixierende Tank-Filter-Aufnahme durch eine optimale Ausrichtung des tankseitigen Filteranschlusselementes im Tank und eine von einer senkrechten Einführbewegung abweichende Einsetzbewegung für die Winkelpatrone realisierbar ist.

Gegebenfalls können hierzu an der Filterpatrone und/oder am Tank weitere Führungselemente zur zuverlässigen Verbindung des tankseitigen Filteranschlusselementes mit den filterseitigen Tankanschlusselement vorgesehen sein. Insbesondere gut eignet sich hierfür z.B. tankseitig vorgesehene in der Einführrichtung einen sich verjüngenden Querschnitt ausbildende Rippen, durch welche das filterseitige Anschlusselement und/oder das Filtergehäuse und/oder eine vom Filtergehäuse vorstehende Führuhgsstruktur, wie z.B. ein Anschlussring oder dergleichen, beim Einsetzen der Filterpatrone führen. Eine solche filterseitige Führungsstruktur kann als Umfangsfläche ausgebildet sein, sie kann auch schlitzförmig, komplementär zu den oben beschriebenen Rippen ausgebildete Konturen und/oder eine andere geeignete Struktur aufweisen.

Bei einer Rippen-Schlitz-Kodierung ist wiederum eine weitere Kodiermöglichkeit durch in Draufsicht betrachtet unterschiedliche Winkelkodierung für einzelne oder mehrere solche komplementärer Elemente möglich. Nur wenn die Schlitz-Rippenkombination und die abgewinkelte Tank-Filteranschlussstruktur zusammenpassen kann eine entsprechende Filterpatrone betriebsgemäß eingesetzt werden.

Diese hier beschriebene Führungs- und Kodierstruktur ist aber durchaus auch für nicht abgewinkelt ausgebildete Filteranschlusselemente mit der gleichen Wirkungsweise einsetzbar.

Eine zusätzliche Führungs- und/oder Kodierfunktion kann durch an der Filterpatrone stirnseitig ausgebildete, vorstehende Spitzen oder Ausnehmungen realisiert werden, welche in entsprechend komplementär ausgeformte, tankseitige Kodier- und/oder Führungsstrukturen eingreifen können.

Zur Realisierung einer Verschnittvorrichtung können aber auch entsprechende Öffnungen und/oder Kanäle in der Filterpatrone ausgebildet sein, die z.B. mit und/oder ohne Wechselwirkung mit einem tankseitigen Verschnittelement einen Verschnitt für das durch die Filterpatrone gefilterten Wassers ermöglichen. In entsprechender Weise gilt dies auch bei der Verwendung eines gegebenenfalls zwischen tank- und filterseitigem Anschlusselement zwischengefügtem Anschluss und/oder Verlängerungselement, wie z.B. einem Adapter mit gleicher und/oder anderer Anschluss- und/oder Kodier- und/oder Fixier- und/oder Dichtstruktur.

Um sicherzustellen, dass zur Umgehung der erfindungsgemäßen Kodierung der Tank einer Maschine gegen einen nicht zugelassenen Tank ohne Kodierungsstrukturen für den Einsatz nicht zugelassener Filterpatronen ausgetauscht werden, empfiehlt es sich, die Schnittstelle zwischen Tank und Maschine ebenfalls mit Kodierungsstrukturen zu versehen, die einem der oben beschriebenen Ausführungsbeispiele gleichen können. Hierbei sind die maschinenseitigen sowie die tankseitigen Anschlusselemente entsprechend zu kodieren.

Von der Erfindung sind auch Ausführungen erfasst, die den Anschluss der Filterpatrone über separate, mit der Filterpatrone oder dem Tank verbindbaren Adapterteilen realisieren. Gleiches gilt für den Anschluss zwischen Tank und zugehörigem Gerät.

Die Erfindung ist bei allen wasserführenden Geräten, insbesondere bei wasserführenden Haushaltsgeräten oder Geräten zur Aufbereitung von Speisen und/oder Getränken vorteilhaft einsetzbar, wie Getränkeautomaten, insbesondere Kaffeeautomaten, Trinkwasserspender, Koch- und Backgeräte, Dampf- und/oder Hochdruckreiniger, Luftreiniger und -konditionierer oder dergleichen, die einen entsprechenden Wassertank aufweisen.

Verschiedene Ausführungsbeispiele der Erfindung sind in den Zeichnungen dargestellt und werden an Hand der Figuren nachstehend näher erläutert.

Im Einzelnen zeigen
- Fig. 1: eine Seitenansicht auf einen Bodenausschnitt eines Wassertankes mit eingesetzter Filterpatrone,
- Fig. 2: eine Draufsicht auf einen Bodenausschnitt eines Wassertanks gemäß Figur 1,
- Fig. 3: eine Draufsicht auf das Tankanschlusselement einer Filterpatrone gemäß Figur 1,
- Fig. 4: eine perspektivische Darstellung einer Filterpatrone gemäß Figur 1,
- Fig. 5 und 5a: zwei Ausführungsvarianten mit winkelabhängiger Verschnittmengeneinstellung,
- Fig. 6 bis 17: eine weitere Ausführungsform eines Filteranschlusses für eine an einen Tank anzuschließende Filterpatrone mit einem tankseitigen Filteranschlusselement und einem filterseitigem Tankanschlusselement schematisch und beispielhaft in unterschiedlichen Ansichten und Ausschnitten dargestellt,
- Fig. 18: beispielhaft und schematisch einen filterseitigen und einen geräteseitigen Tankanschluss, jeweils in Kombination mit einem entsprechend ausgebildeten Adapterstück,
- Fig. 19 und 20: zwei weitere Ausführungsformen einer Kodierung für eine Tank-Filter-Verbindung und
- Fig. 21-57: weitere mögliche Ausführungsformen in unterschiedlichen Ansichten beispielhaft und schematisch dargestellt.

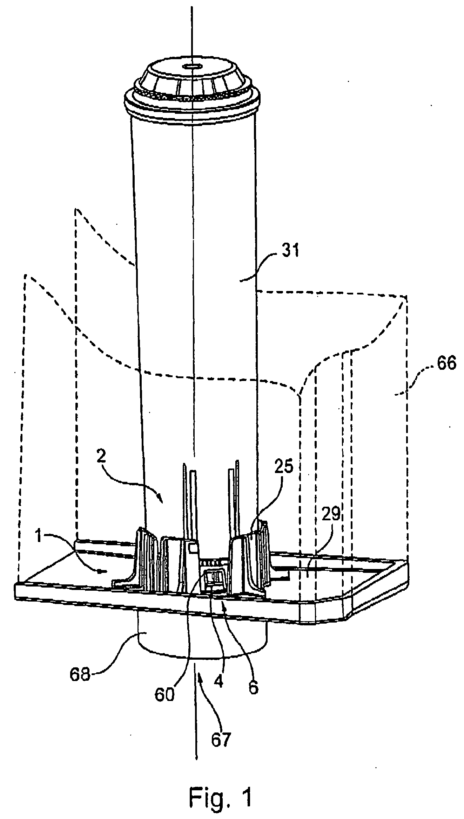

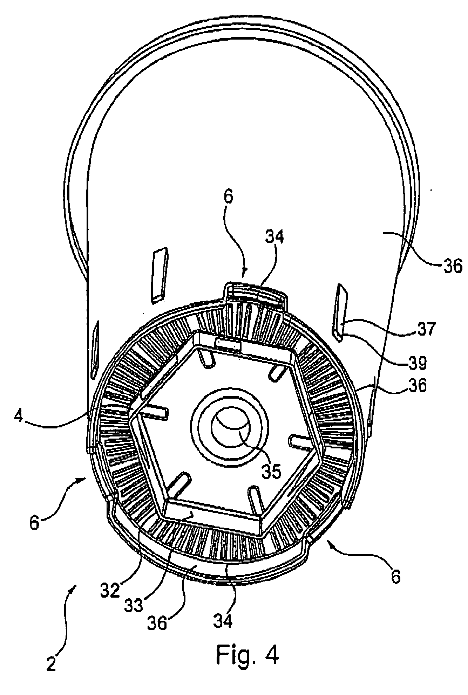

Figur 1 zeigt Anschlusselemente 1,2 eines ausschnittsweise, durch gestrichelte Linien schemenhaft dargestellten Tanks 66 sowie einer zugehörigen Filterpatrone 31. Tankseitig ist ein Anschlusssockel 1 dargestellt, der fest mit dem Boden 29 des zugehörigen Tanks 66 verbunden, beispielsweise verschweißt, verklebt oder auf sonstige Weise befestigt wird. In diesen Anschlusssockel 1 ist das Tankanschlusselement 2 der Filterpatrone 31 eingesetzt. Das filterseitige Tankanschlusselement 2 ist in Fig. 4 besser zu erkennen und umfasst einen Anschlussstutzen 4, der in das Patronengehäuse 36 übergeht. In der Ausführungsvariante gemäß den Figuren 1 und 4 gelangt das Wasser über seitliche Schlitze 6 und anschließend über patronenbodenseitig angeordnete Durchlassöffnungen 34 in das Innere des Patronengehäuses 36 und passiert anschließend ein nicht näher dargestelltes Filterbett. Die Filterstrecke kann dabei im Aufstrom, im Abstrom oder in Kombination mit beiden Strömungsführungen ausgebildet sein. Durch das zentrale Abflussrohr 35 gelangt das gefilterte Wasser letztendlich über den tankseitigen Geräteanschluss 68 in den Sauganschluss 67 Wassertanks 66.

Der tankseitige Geräteanschluss 68 ist aus Vereinfachungsgründen hier nur beispielhaft als rund ausgeformten Anschlussstutzen dargestellt. Wie der Anschlusssockel 1 des tankseitigen Filteranschlusses kann aber auch der tankseitige Geräteanschluss 68 Kodierungsstrukturen aufweisen, um sicherzustellen, dass nur zulässige Anschlussverbindungen hergestellt werden können. Also sowohl mit einer für den Tank zu verwendeten Filterpatrone als auch, sofern gewünscht, mit einem für die Verwendung dieses Tanks geeigneten Gerät. Der Übersichtlichkeit halber wird von einer grafischen Darstellung solcher Details für den Geräteanschluss 68 abgesehen und hinsichtlich der hierzu möglichen Ausführungsformen auf die bezüglich des Tanks-Filter-Anschlusses beschriebenen Ausführungsformen verwiesen, die in vollem Umfang auch für den Tank-Geräteanschluss Gültigkeit haben.

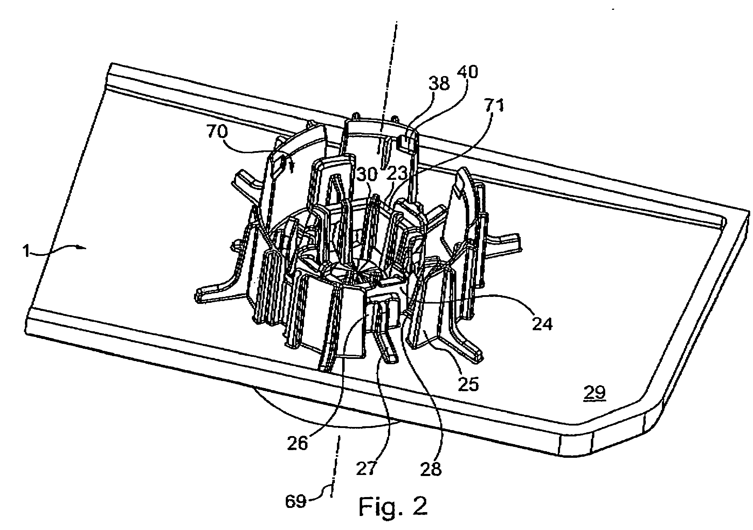

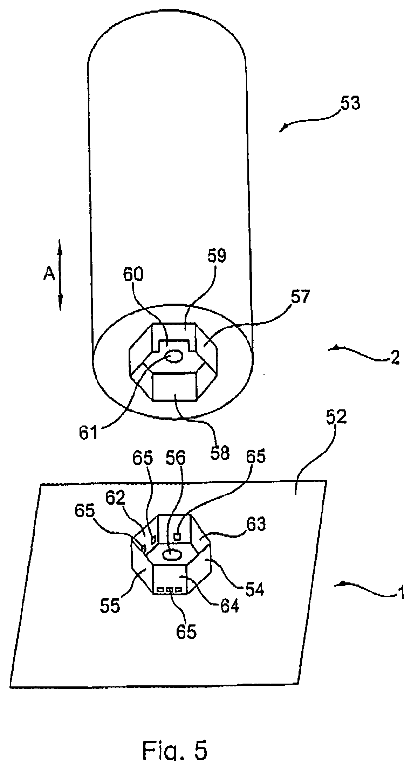

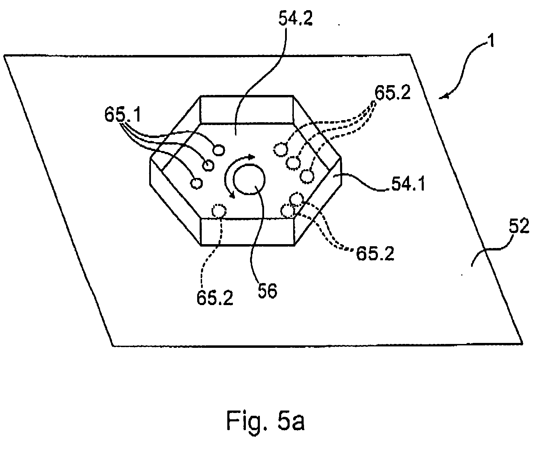

Eine erste mögliche Ausführungsform einer tankseitigen Filterpatronenkodierung ist in den Figuren 2 und 5 als tankseitiges Filteranschlusselement gezeigt, dessen Umfangsfläche 33 einen polygonförmigen Querschnitt aufweist. In diesem speziellen Ausführungsbeispiel ist das Polygon stellvertretend für eine Vielzahl anderer möglicher Ausführungsformen als Sechseck ausgebildet. In einem nachfolgend noch zu beschreibenden Ausführungsbeispiel ist in einer Abwandlung davon ein tankseitiges Filteranschlusselement dargestellt, dessen Umfangsfläche einen polygonen Querschnitt in der Form eines Vierecks darstellt.

Weitere Details zu einer möglichen Kodierung zwischen einem tankseitigen Filteranschlusselement 1 und einem filterseitigen Tankanschlusselement 2 werden nachfolgend unter Bezugnahme auf die Figur 2 beschrieben. Das hierbei beispielhaft als Sechskant ausgebildete tankseitige Filteranschlusselement 23 in der Form eines Anschlusssockels 23 ist zur Realisierung seiner polygonen Kontur als Vorsprung 23 mit einem polygonförmigen Außenumfang 24 bzw. einem entsprechend polygonförmigen Innenumfang ausgebildet. Die komplementäre Patronenanschlussstruktur liegt nach Aufstecken der Filterpatrone formschlüssig und dichtend mit ihrem Innenumfang 33 am Außenumfang 24 die Filterpatrone 31 fixierend und abdichtend an.

### Der tankseitige

Filteranschlusssockel 23 und der Anschlussstutzen 4 der Filterkartusche umschließen sich. Bei vollständiger Umschließung ist neben dem zusätzlich stabilisierenden Effekt der umlaufenden Berührungsflächen zwischen diesen beiden Elementen auch eine einwandfreie, großflächige Abdichtung zwischen der Frischwasserseite im Inneren des Tanks 66 und der an der Anschlussöffnung 35 gelegenen Seite der Filtervorrichtung zur Geräteversorgung über den Sauganschluss 67 gewährleistet.

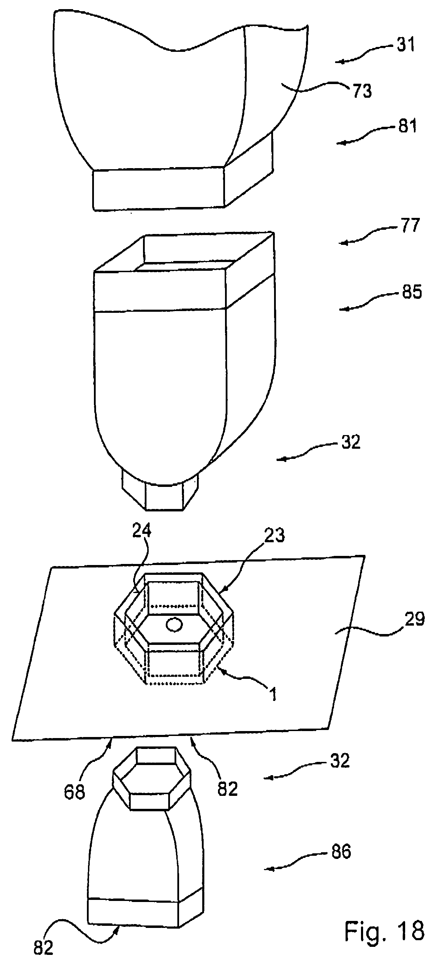

Bei einer nicht erfindungsgemäßen Ausführungsform entsprechend der Figur 18 kann in Umkehrung dieser Aufbauweise das tankseitige Filteranschlusselement 23 als komplementäre Struktur in der Form einer Ausnehmung mit einem entsprechenden Innenumfang ausgebildet sein, an welcher wiederum die Dichtfläche 33 der Filterpatrone vorzugsweise formschlüssig und flächig dichtend anliegen kann, wobei hierdurch wiederum gleichzeitig eine ausreichende Fixierung der Filterpatrone 31 am Tank 66 gewährleistet ist.

Wiederum bezugnehmend auf die Figur 2 werden nun weitere Details zur Kodierung des Tank-Filteranschlusses für die als Vorsprung 23 ausgebildete Ausführungsform beschrieben.

Der tankseitige Anschlusssockel 23 (Figur 2) weist eine sechskantförmige Außenkontur auf, dessen umfangseitige Außenfläche eine Dichtfläche 24 bildet. Außerhalb um den Sockel 23 sind in Richtung einer einzusetzenden Filterpatrone 31 weisende, etwa parallel zu einer durch den Anschluss verlaufenden Längsachse 69 ausgerichtete Außenschalen 25 angeordnet, die geeignet sind, ein Filterpatronengehäuse bzw. dessen Anschlussbereich von außen wenigstens teilweise zu umschließen.

Im Zwischenraum 70 zwischen dem Anschlusssockel 23 und den Außenschalen 25 sind Sperrelemente 26 angebracht, die sicherstellen, dass nur eine schmale, auf die Dichtfläche 24 passende Dichtung in den Bereich des Anschlusssockels 23 eingeführt werden kann.

Bodenrippen 27, 28 verhindern eine Abdichtung gegenüber dem Tankboden 29, ebenso wie Innenrippen 30 das Abdichten mittels einer inneren Radialdichtung verhindern. Die Bodenrippen sind vorzugsweise radial und/oder tangential in Bezug auf den Anschlussstutzen 23 ausgerichtet in Bodennähe angeordnet. Die Innenrippen 30 stehen nach innen und/oder nach oben über einen oberen Rand 71 des Anschlusssockels 23 vor. Durch diese Strukturen ist einzig und allein die Dichtfläche 24 als Dichtfläche zugänglich, so dass durch die hier beispielhaft dargestellte Sechskantaußenkontur der Dichtfläche 24 eine erfindungsgemäße Kodierstruktur vorliegt.

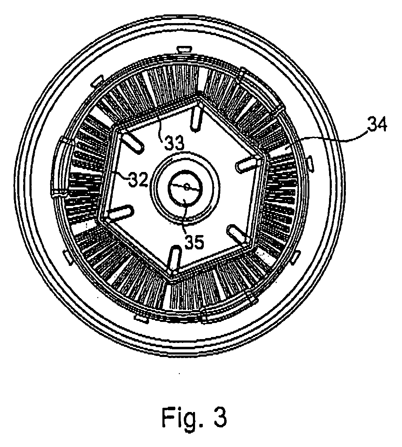

Die eingesetzte Filterpatrone 31 ist mit einer Formdichtung 32 versehen, die dementsprechend ebenfalls einen Sechskantquerschnitt aufweist (vergleiche Figur 3). Die Innenfläche der Formdichtung 32 bildet dabei die Dichtfläche 33.

In Figur 3 sind darüber hinaus die Eintrittsschlitze 34 zur Wasserzufuhr in die Filterpatrone sowie eine zentrale Abflussöffnung 35 für die Wasserabfuhr erkennbar.

Über die Formdichtung 32 mit entsprechend geformtem Anschlusssockel 23 umfasst die dargestellte Ausführungsform noch weitere Kodierungsstrukturen. So sind außen am Filterpatronengehäuse 36 Schnappelemente 37 (vgl. Figur 4) angeformt. Die Schnappelemente 37 sind in entsprechende Aufnahmen 38 der Außenschalen 25 einführbar. Beim Aufsetzen der Unterkante 39 am Anschlag 40 der Aufnahmen 38 ergibt sich ein Druckpunkt. Bis in diese Position lässt sich die Filterpatrone 31 leicht ohne Gegenwiderstand in der richtigen Winkelposition aufsetzen. In dieser Winkelposition befindet sich die Formdichtung 32 ausgerichtet gegenüber der Dichtfläche 24 des Anschlusssockels 23, so dass sie in axialer Richtung weiter einführbar ist. Durch weiteres Eindrücken in axialer Richtung schnappt das Schnappelement 37 über der. Anschlag 40, wobei die Formdichtung 32 entlang der Dichtfläche 24 eingedrückt wird. Durch die Abschrägung der Schnappelemente 37 und die entsprechende Innenform der Außenschalen 25 wird die Filterpatrone 31 in den Außenschalen 25 fixiert. Weitere axiale Fixierungselemente sind in dieser Ausführungsform nicht mehr erforderlich.

Fig. 5 zeigt eine schematisch dargestellte Ausführungsform mit winkelabhängig einstellbarer Verschnittmenge. Der Tankboden 52 ist nur ausschnittsweise im Anschlussbereich der Filterpatrone 53 dargestellt. Der Tankboden 52 umfasst einen sechskantförmigen Anschlusssockel 54, der nach oben hin zur Verbesserung der Abdichtwirkung gegenüber einer rein senkrechten Ausrichtung der Sockelwände und/oder als weitere Kodierstruktur nach Art eines Pyramidenstumpfes leicht konvergiert. Diese Querschnittsverjüngung ist in der perspektivischen Darstellung kaum zu erkennen.

Die Außenflächen 55 des Anschlusssockels dienen zugleich als Dichtfläche, um die Abflussleitung 56 bei aufgesetzter Filterpatrone 53 ganz oder teilweise gegenüber dem Innenraum des Tanks abzudichten.

Die Filterpatrone 53 weist eine zum Anschlusssockel 54 korrespondierend kodierte sechskantförmige Dichtung 57 auf. Die einzelnen Wände 58 sind mit Ausnahme einer Wand 59 in axialer Richtung A gleich lang ausgebildet. Die Wand 59 ist mit einer unterseitigen Aussparung 60 versehen, deren Funktion nachfolgend näher erläutert wird. Im Inneren der Dichtung 57 ist der Ausgang 61 aus der Filterpatrone 53 erkennbar, durch den das gefilterte Wasser in die Abflussleitung 56 gelangt.

Verschiedene Sockelwände 62, 63, 64 des Anschlusssockels 54 sind mit einer unterschiedlichen Anzahl von Bypassöffnungen 65 versehen. Die Bypassöffnungen 65 sind so angeordnet, dass sie von den länger ausgebildeten Dichturgswänden 58 beim Aufstecken der Filterpatrone 53 dicht verschlossen werden. Lediglich dort, wo die Wand 59 mit Aussparung 60 zum Einsatz kommt, können die Bypassöffnungen 65 geöffnet bleiben, so dass über die Aussparung 60 gefiltertes Wasser unmittelbar aus dem Tank zum Bereich der Abflussleitung 56 gelangt.

Wie anhand des dargestellten Ausfüirungsbeispiels unschwer erkennbar ist, wird durch die Winkelanordnung der Filterpatrone, d.h. mit der Auswahl der Scckelwand 62, 63, 64, an der die Aussparung 60 angesetzt wird, die Größe des freien Querschnitts der Bypassöffnungen 65 eingestellt.

In der vorliegenden Ausführungsform summieren sich die Querschnittsöffnungen der mehrfach angebrachten Bypassöffnungen 65. In anderen Ausführungsformen können auch einfach unterschiedlich große Bypassöffnungen 65 vorgesehen werden. Durch die unterschiedlichen Querschnitte einzelner Bypassöffnungen 65 oder in der Summe mehrerer Bypassöffnungen 65 an einer Sockelwand, beispielsweise der Sockelwand 64, ergeben sich unterschiedliche Anteile an ungefiltertem Wasser, die gefilterten Wasser beigemengt werden. Es ergibt sich somit eine Verschnitteinstellung, die abhängig ist von der Winkelposizion der Filterpatrone 53.

Eine weitere, mögliche Ausführungsform einer Verschnitteinstellung kann z.B. durch die Ausbildung eines durch die Filterpatrone betätigbaren Mitnehmerelementes in der Form eines in seiner Position drehbar verstellbaren Anschlusssockels 54.1 entsprechend der Darstellung in der Figur 5a realisiert werden. Der Boden 54.2 des drehbaren Anschlusssockels 54.1 weist hier beispielhaft drei Bypassöffnungen 65.1auf und kann je nach Drehposition gegenüber dem Tankboden 52 so angeordnet werden, dass im Tankboden 52 angeordnete, komplementäre Bypassöffnungen 65.2 fluidleitend freigegeben bzw. verschlossen werden.

In dieser Darstellung sind rein beispielhaft vier unterschiedliche Einstellungen dargestellt, die gezeigte Drehposition mit verschlossenen Bypass und drei weitere Positioniermöglichkeiten, mit der Freigabe von jeweils einem, zwei oder allen drei Bypasslöchern 65.1 durch Übereinstimmung in ihrer Lage mit den entsprechenden Bypasslöchern 65.2. Eine mögliche Trennvariante zwischen den mit dem tankseitigen Frischwasseranschluss verbundenen Bypasslöchern 65.1 und der beispielhaft zentral angeordneten Abflussleitung 56 wäre die Anordnung einer dazwischen liegenden Dichtung, insbesondere und vorzugsweise einer Axialdichtung, die sich zwischen der Stirnseite des filterseizigen Tankanschlusselementes und dem Boden 54.2 des Anschlusssockels 54.1 dichtend erstreckt. Denkbar sind durchaus aber auch andere ggf. auch zusätzliche trennende und/oder dichtende Elemente zwischen der Frischwasserseite und der Seite des gefilterten Wassers.

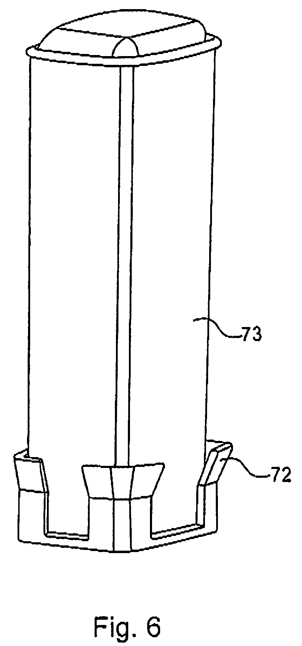

Neben den dargestellten Ausführungsformen sind ohne Weiteres auch weitere Ausführungsformen und/oder Kombinationen mit dieser Ausführungsform denkbar. So können beispielsweise die bisher beschriebenen Kodierungsstrukturen in der Form von beispielhaft dargestellten, sechskantigen Polygonen durch andere Kodierstrukturen, wiederum beispielhaft z. 3. in der Form von Vierkar.tpolygonen ergänzt und/oder kombiniert werden, wie sie beispielsweise durch eine Ausführungsform der Figur 6 zusätzlich beispielhaft gezeigt ist.

Neben den dargestellten Ausführungsformen sind ohne Weiteres weitere Ausführungsformen oder Kombinationen dieser Ausführungsformen denkbar. So können beispielsweise die bisher beschriebenen Kodierungsstrukturen in der Form von beispielhaft dargestellzen, sechskantigen Polygenen durch andere Kodierstrukturen, wiederum beispielhaft z. B. in der Fcrm von Vierkantpolygonen ergänzt und/oder kombiniert werden, wie sie beispielsweise durch eine Ausführungsform der Figuren 6 bis 17 zusätzlich beispielhaft gezeigt ist.

Im Detail zeigt die Figur 6 einen Anschlusssockel 72, der in Draufsicht eine viereckige Kontur aufweist und in welcher eine entsprechend geformte Patrone 73 mit einem komplementären, ebenfalls im Querschnitt viereckigen Anschlussstück eingesteckt ist. Der Übersichtlichkeit halber wurde hier von der Darstellung des Tanks und des Tankbodens, mit welchem der Anschlusssockel 41 dichtend zu verbinden ist, abgesehen.

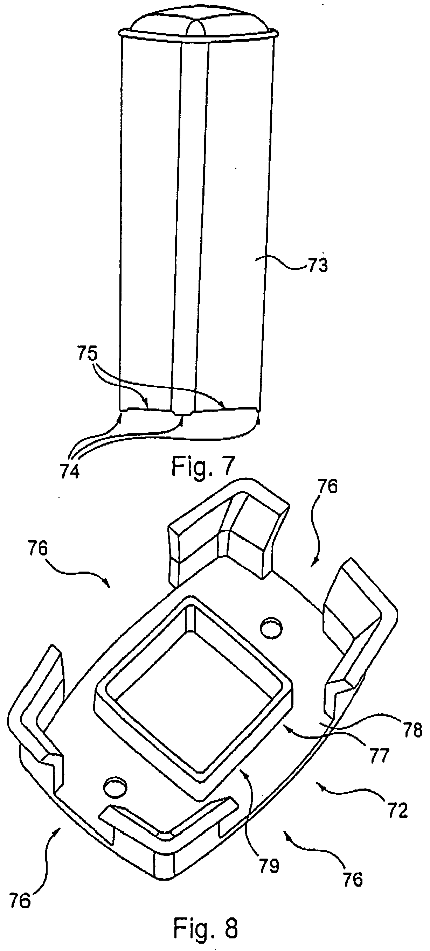

Die Figuren 7 und 8 zeigen die Patrone 73 und das Anschlusselement 72 jeweils in alleiniger Darstellung. Im unteren Bereich der Patrone 73 sind drei von vier vorgesehenen Füßen 74 erkennbar, zwischen denen jeweils eine für den Eintritt von Frischwasser ausreichend große Zulauföffnung 75 bei im Anschlusselement 72 eingesteckte Patrone 73 ausgebildet ist. Das Anschlusselement 72 weist entsprechend komplementäre Einlassöffnungen für den Durchtritt des Frischwassers aus dem Tank hin zur Filterpatrone 73 auf. Ein beispielsweise dem Anschlusssockel 23 entsprechender Anschlusssockel 77 ist zentral an einer Bodenplatte 78 des Anschlusselementes 72 ausgebildet, wiederum in Form eines Vorsprungs. Dieser als Vorsprung ausgebildete Anschlusssockel 77 weist an seiner äußeren Umfangfläche eine Dichtfläche 79 auf, die gegenüber einer komplementären, an der Filterpatrone angeordnete Aufnahmestruktur den Frischwasserbereich vom Bereich des durch den Filter gefilterten Wassers dichtend trennt. Auch in dieser viereckigen Ausführungsform kann in bevorzugter Weise dem Anschlusssockel 77 eine zumindest leicht konische Form aufgeprägt sein, so dass die aufzusetzende Patrone mit ihrem Anschlussstück einerseits leichter aufzusetzen ist und andererseits auch eine größere Fläche für die Abdichtung zwischen den beiden Elementen zur gegenseitigen Abdeckung gebracht werden kann.

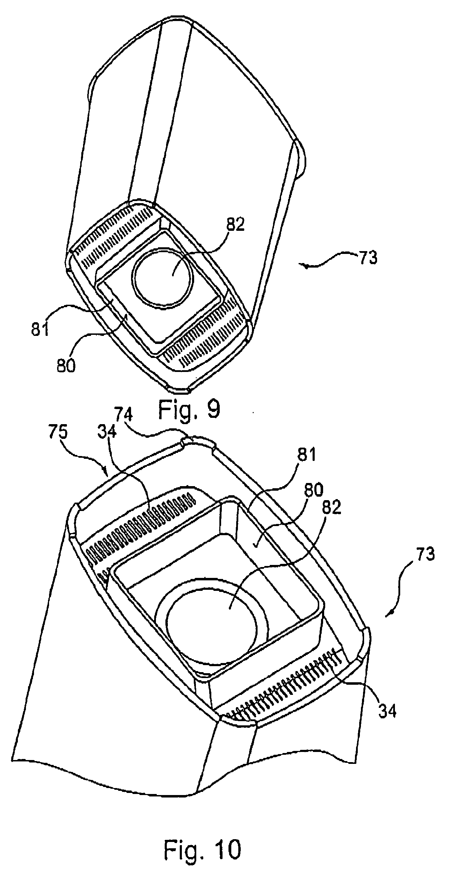

Die Figuren 9 und 10 zeigen jeweils eine Patrone 73 in einer Unteransicht, in welcher eine zum Anschlusssockel 77 komplementäre Formdichtung 81 mit einer darin ausgebildeten Dichtfläche 80 dargestellt ist. Zentral in der Mitte ist der Auslauf 82 für das gefilterte Wasser zu erkennen, welches durch die Zulaufsschlitze 34 in der Filter einströmen kann.

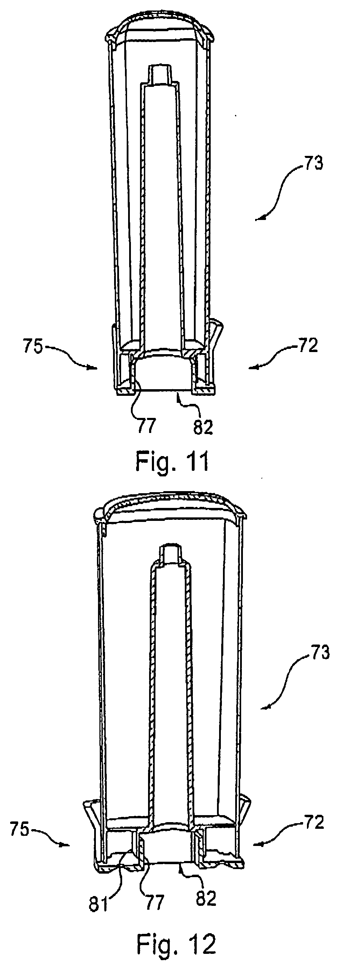

Die Figuren 11 und 12 zeigen jeweils einen Längsschnitt durch das Anschlusselement 72 und eine darin eingesteckte Patrone 73, einmal entlang der Breitseite (Figur 11) und einmal entlang der Längsseite (Figur 12), der in Draufsicht rechteckigen Anschlussstruktur.

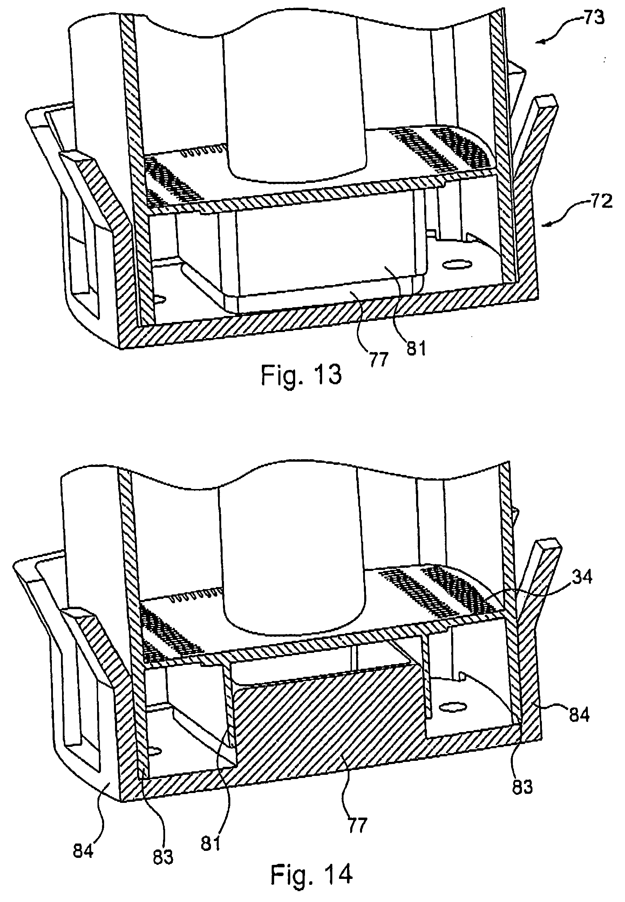

Die Figuren 13 und 14 zeigen zwei Ausschnitte im Verbindungsbereich zwischen Anschlusssockel 77 und Patrone 73 mit darin angeordneter Formdichtung 81, jeweils in unterschiedlich tief gelegener Schnittebene. Insbesondere in der Figur 14 ist gut zu erkennen, dass neben der formschlüssigen Verbindung zwischen der Formdichtung 50 und dem Anschlusssockel 77 auch eine fixierende Wirkung zwischen der verlängerten Außenwand 83, der Filterpatrone 73 und den Elementen der Außenschale 84 gegebenen ist, vorzugsweise ebenfalls in einer formschlüssigen Art und Weise.

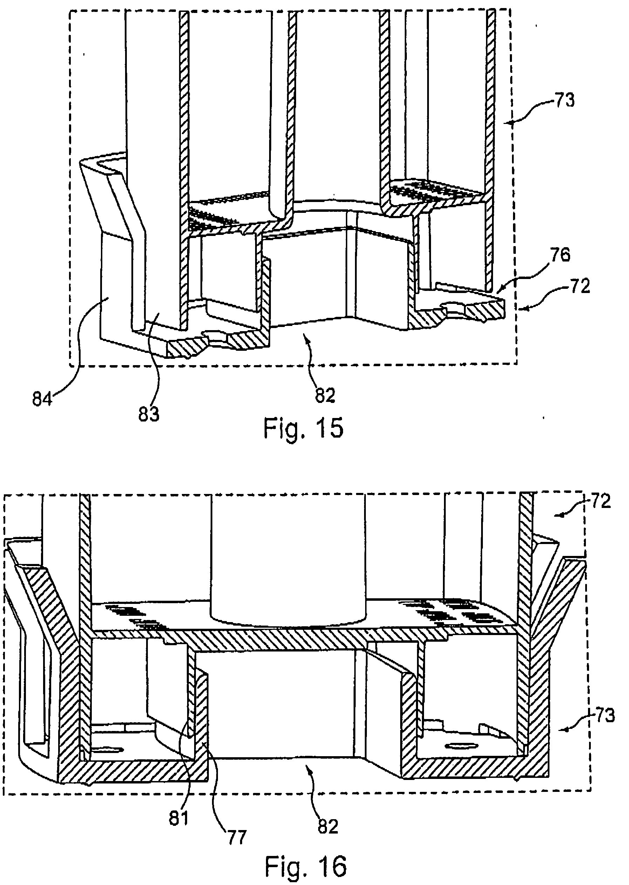

Die Figuren 15 und 16 zeigen zwei weitere Schnittdarstellungen entsprechend der Figuren 13 und 14, jedoch wiederum in verschieden tief liegenden Schnittebenen.

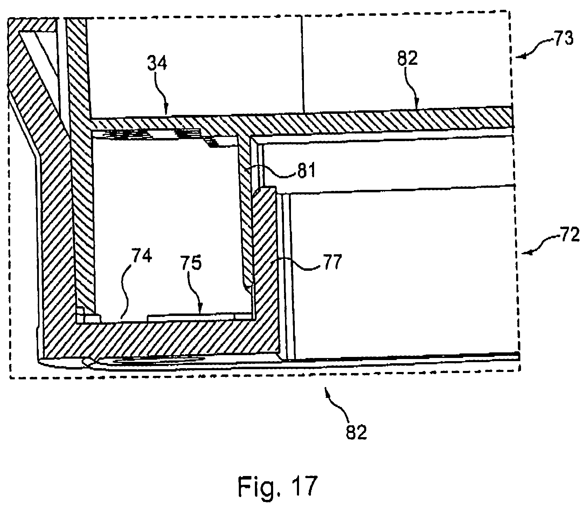

Die Figur 17 zeigt schließlich eine weitere, ausschnittsweise Darstellung in noch größerem Maßstab.

Die Figur 18 zeigt nicht erfindungsgemäß schließlich neben einer im Vergleich zu den Ausführungsformen in den Figuren 1 bis 4 beschriebenen Sockel-Filterverbindung in der Form eines Vorsprungs 23 am tankseitigen Filteranschlusselement 23 eine komplementäre Form als im Tankboden 29 ausgebildete Ausnehmung 23, bei der sinngemäß alle zu der ersten Ausführungsform beschriebenen Kodierungsmöglichkeiten auch hier realisiert werden können, und zwar entweder gleich und/oder auch komplementär bzw. auch in kombinierten Ausführungsformen.

Als zweites wesentliches Merkmal zeigt die Figur 18 die Möglichkeit der Verwendung von Adaptern 85, 86. Der Adapter 85 ist rein beispielhaft zum Anschluss einer ebenfalls beispielhaft dargestellten Filterpatrone 73 an einen tankseitigen Filteranschluss 1 dargestellt, wobei die Ausführungsform des Filteranschlusses 1, insbesondere seines Sockels 23, wie oben bereits dargelegt, sowohl als vorstehender Sockel als auch als vertieft ausgebildete Nut realisiert sein kann. Das Gleiche gilt sinngemäß für den tankseitigen Geräteanschluss an der Unterseite des Tankbodens 29. Aufgrund der sinngemäß gleichen Funktionalitäten sind auch die einzelnen Elemente mit den gleichen Nummerierungen versehen, wie zum Teil bereits oben in der Beschreibung verwendet.

Die dargestellten Ausführungsvarianten zeigen die unterschiedlichsten Kodierungsstrukturen, die erfindungsgemäß vorzusehen sind. In jedem Fall ist gewährleistet, dass nur entsprechend angepasste Filterpatronen mit Schlüsselfunktion in die entsprechenden tankseitigen Filteranschlüsse passen.

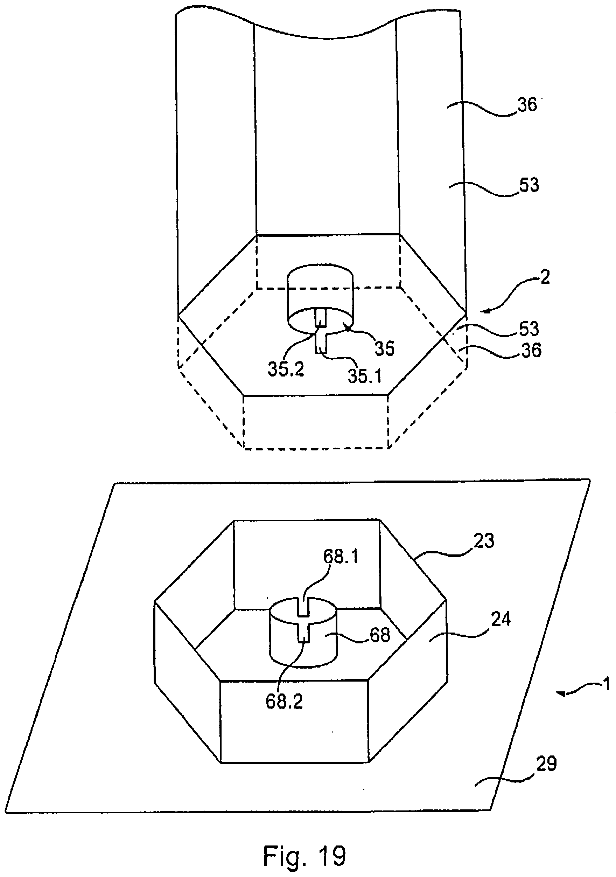

Zwei weitere Ausführungsformen von Kodierungen des Anschlusses zwischen Tank und Filter werden anhand der Figuren 19 und nicht erfindungsgemäß 20 dargestellt und beschrieben. Bei der Figur 19 weist das Gehäuse der Filterpatrone 53 selbst eine polygone Außenkontur in der Form eines Sechskantes auf, der nicht erfindungsgemäß in eine komplementäre, tankseitige polygone Kodier- und/oder Fixierstruktur 23 einsetzbar ist. Die fest durchgezogenen Linien zeigen die Filterpatrone 53 in einer Ansicht von schräg unten mit einem im Grunde ebenen Boden in dessen Mitte der Filterauslass 35 für das filtrierte Wasser beispielhaft als zylinderförmig vorstehendes Rohr mit zwei stirnseitigen axial vorstehenden Ansätzen 35.1 und 35.2 ausgebildet ist. Dieses zylindrisch vorstehende Auslasselement 35 ist durch die beiden axial vorstehenden Flügel kodiert und bildet mit seiner Stirnseite gegenüber der Stirnseite eines komplementären im tankseitigen Filteranschluss ausgebildeten Auslass- und Aufnahmeelementes 68 mit seinen bei den Kodiernuten 68.1 und 68.2 eine axiale Kodier- und/oder Dichtstruktur bzw.-kontur. Die Filterpatrone 53 kann nur dann funktionstüchtig, nicht erfindungsgemäß, in das tankseitige Filteranschlusselement 1 eingesteckt werden, wenn die Stirnseite des Filterauslasses 35 dichtend mit der Stirnseite des tankseitigen Geräteauslasses 68 zusammenpasst.

Die hier beispielhaft dargestellte, sechskantige Außenkontur der Filterpatrone 53 kann in der mit den durchgezogenen Linien dargestellten Ausführungsform, nicht erfindungsgemäß, in den Anschlusssockel 23 des tankseitigen Filteranschlusselementes 1 fixierend und gegebenenfalls auch dichtend eingesteckt werden. Hierbei dient, nicht erfindungsgemäß, der Innenumfang des Anschlusssockels 23 zur Fixierung und gegebenenfalls zur Dichtung gegenüber dem Außenumfang bzw. gegenüber deren Anschluss.

Um eine weitere Befestigungsmöglichkeit zwischen der hier beispielhaft als Sechskant dargestellten, polygonförmigen Außenkontur der Filterpatrone 53 und einem entsprechend komplementären tankseitigen Anschlusssockel 1 aufzuzeigen ist das Gehäuse 36 der Filterpatrone 53 durch die gestrichelten Linien als gegenüber dem zuvor beschriebenen Filterboden verlängert dargestellt. Dieser polygonförmige, gegenüber dem Boden der Filterpatrone vorstehende Anschlussring kann zur Fixierung der Filterpatrone über den tankseitigen Filteranschlussstutzen 23, wiederum fixierend und vorzugsweise dichtend je nach Ausführung, soweit übergestülpt werden, bis die beiden Innenkodierungen, des Filterauslasses 35 und des Tankauslasses 68, dichtend aneinander anstehen bzw. deren hier beispielhaft gezeigten flügelartigen und komplementären schlitzartigen Kodierstrukturen dichtend aneinander anstehen bzw. ineinander greifen. Zur Wasserführung vom Tank ins Innere der Filterpatrone sind entsprechende Öffnungen und/oder Kanäle vorgesehen, die hier jedoch nicht gezeigt sind. Ebenfalls vorgesehen und nicht gezeigt können entsprechende Bypassstrukturen sein, wie sie bereits oben ausführlich beschrieben sind. Die Figur 19 zeigt somit sowohl eine Fixierung der Filterpatrone am Innenumfang des tankseitigen Filteranschlusselementes 23 als auch an dessen Außenumfang 24.

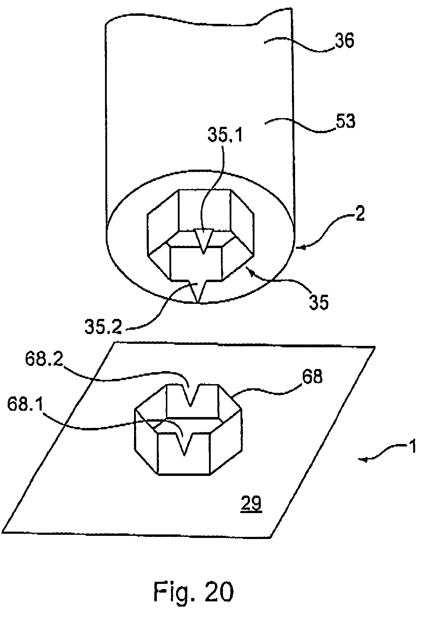

Die Figur 20 zeigt demgegenüber, nicht erfindungsgemäß, eine dahingehend abgewandelte Ausführungsform, dass das Gehäuse 36 der Filterpatrone beispielhaft rund dargestellt ist und der Filterauslass 35 als polygone Struktur, hier wiederum beispielhaft als Sechskant, der zusätzlich wieder eine stirnseitige Kodierung in der Form zweier axial vorstehender, kodierender, dreieckiger Spitzen oder Flügeln aufweist. Auch hier kann die Filterpatrone nur dann funktionstüchtig mit dem tankseitigen

Filteranschlusselement 1 verbunden werden, wenn die beiden Auslassstrukturen 35 und 68 stirnseitig axial dichtend aneinander angefügt werden können. Von der Darstellung weiterer Kodierungs- und/oder Fixierungsstrukturen wurde aus Gründen der Übersichtlichkeit abgesehen. Es können jedoch alle bereits oben beschriebenen Strukturen auch hier entsprechend vorgesehen werden. Auch für die beiden Ausführungsformen entsprechend der Figuren 19 und 20 gilt, dass auch diese Kodierungsstrukturen, nicht erfindungsgemäß, zwischen Filterseite und Tankseite vertauscht und/oder abgeändert und/oder durch weitere Konturen und/oder Strukturen ergänzt werden können.

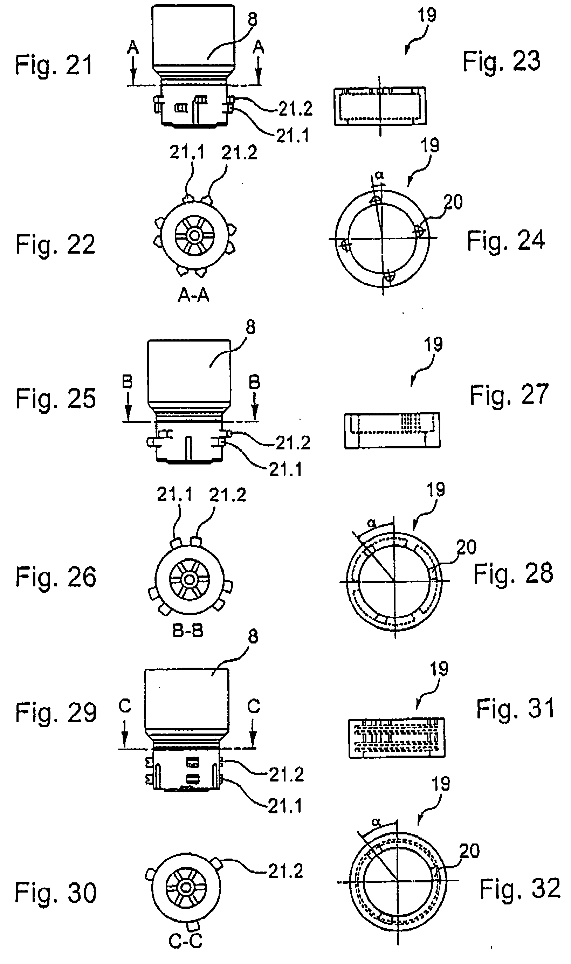

Die Figuren 21 bis 32 zeigen weitere mögliche, nicht erfindungsgemäße. Ausführungsformen von Verschlüsselungs- und/oder Fixierungsstrukturen für Tank-Filter-Anschlusselemente. Hierbei zeigen die Figuren 21 bis 24 eine erste, die Figuren 25 bis 28 eine zweite und die Figuren 29 bis 32 eine dritte mögliche Ausführungsform von Bajonettverbindungen, insbesondere Doppel- bzw. Mehrfach-Bajonettverbindungen.

Der Schwerpunkt bei den Ausführungsformen der Figuren 21 bis 32 liegen dabei in der Darstellung unterschiedlich möglicher Kodierungen in der Form von Doppel- bzw. Mehrfach-Bajonettverbindungen bzw. Schlüsselkodierungen in der Form von Schlüsselschlossfunktionen. Die Figuren 21 und 22 zeigen die filterseitige Tankanschlusskodier- bzw. Fixierstruktur mit in Draufsicht entsprechender Figur 22 acht Vorsprüngen 21.1 und 21.2, die entsprechend der Figur 21 entlang der Längserstreckung des filterseitigen Tankanschlusselementes sowohl axial als auch in einer radialen Winkelstellung zueinander versetzt als zwei Viererpaare ausgebildet sind. Die komplementären Anschluss- bzw. Kodierstrukturen 20 sind im tankseitigen Filteranschlusselement 19 in den Figuren 23 und 24 gezeigt. In dieser Ausführungsform ist entsprechend der Figur 24 ein Winkel α zwischen einer Achse eines eingezeichneten x-y-Koordinatensystems und einer durch die Öffnung 20 verlaufenden Achse als vergleichsweise spitzer Winkel α dargestellt. Um eine Fixierung des filterseitigen Tankanschlusselementes 8 am tankseitigen Filteranschlusselement 19 zu ermöglichen, müssen die stirnseitig zu vorderst angeordneten Kodiervorsprünge 21.1 entsprechend der umlaufenden Verteilung der Öffnungen 20 am tankseitigen Filteranschlusselement 19 verteilt angeordnet sein, so dass überhaupt ein axiales Einschieben des filterseitigen Tankanschlusselementes ermöglicht wird. Nach Überwindung der ersten Einschubtiefe bezüglich der Kodiervorsprünge 21.1 muss eine Drehung um eine durch das filterseitige Tankanschlusselement verlaufende Längsachse erfolgen, soweit bis der zweite Satz Kodiervorsprünge 21.2 in Übereinstimmung mit den Öffnungen 20 kommt und eine weitere axiale Einführung des filterseitigen Tankelementes in das tankseitige Filterelement ermöglicht, bis zu einer Fixierung nach einer weiter folgenden Drehbewegung um die Längsachse durch das filterseitige Tankanschlusselement.

Die Figuren 25 bis 32 stellen ähnliche, nicht erfindungsgemäße, Ausführungsformen dar, jedoch mit gegenüber den Ausführungsformen 21 bis 24 abgewandelten Konturen der Öffnungen 20 und der hierzu komplementären Kodiervorsprünge 21 sowie auch hinsichtlich axial und in Draufsicht betrachtet winkelig abgeänderter Ausrichtungen.

Ein weiterer Unterschied liegt auch in der Anzahl der jeweiligen Kodierstrukturen. In den Ausführungsformen 21 bis 24 sind es insgesamt acht auf zwei Ebenen und in den Ausführungsformen 25 bis 32 jeweils nur sechs als zwei dreifachkodierte Vorsprungsebenen. Auch diese hier beschriebenen Kodierstrukturen können ohne weiteres mit anderen z.B. axial ausgerichteten Kodierstrukturen kombiniert werden, um noch weitere Unterscheidungsmöglichkeiten für einzelne Tank-Filter-Anschlussverbindungen zu ermöglichen.

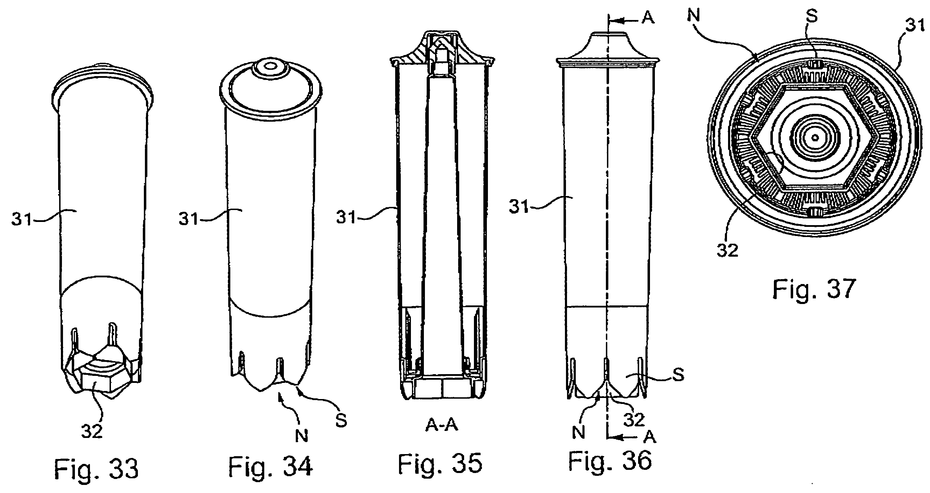

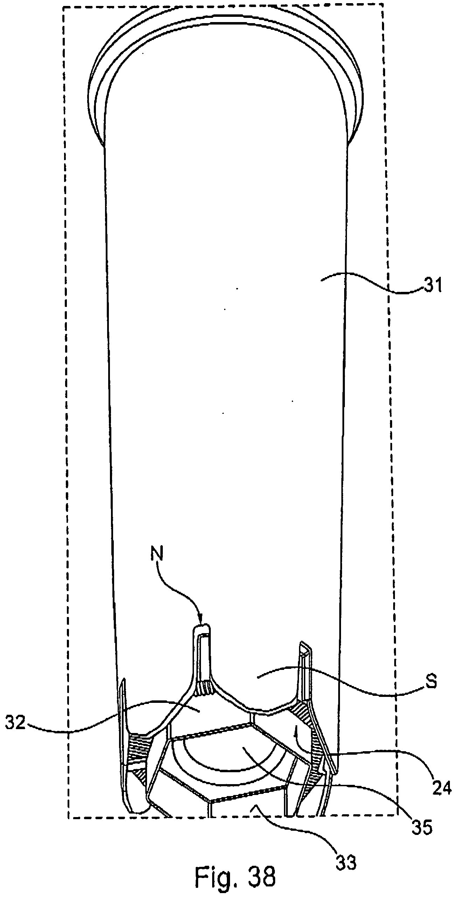

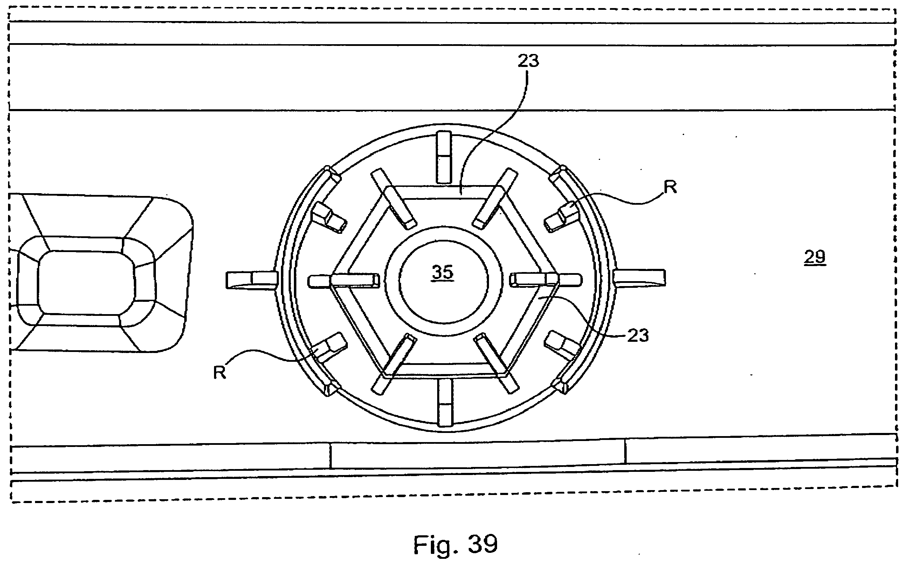

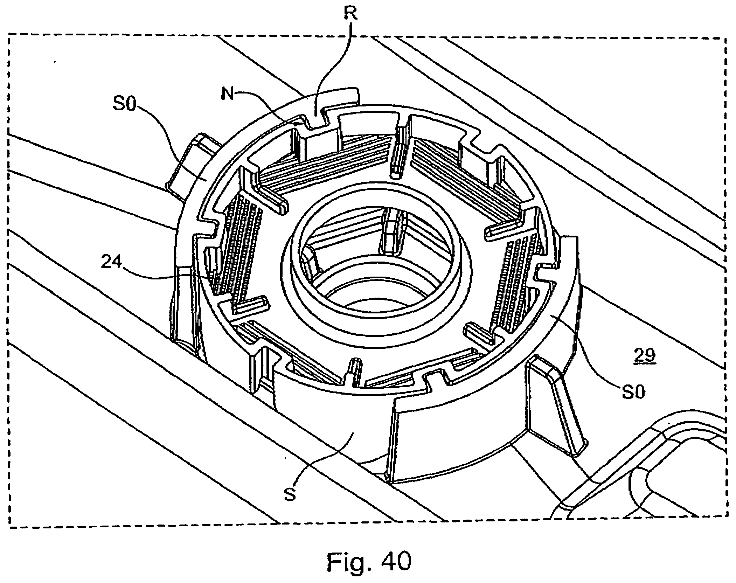

Die Figuren 33 bis 40 zeigen eine weitere Ausführungsform einer Tank-Filter-Anschlussverbindung in unterschiedlichen Ansichten und Darstellungen wie schräge Draufsichten, Schnittdarstellungen, Frontansicht und Unteransicht der Filterpatrone 29 sowie eine Draufsicht auf das tankseitige Filter-Anschlusselement mit und ohne eingefügtes filterseitiges Tank-Anschlusselement (Fig. 39 und 40).

Die wesentlichen Merkmale der Ausführungsform einer Tank-Filter-Anschlussverbindung sind die stirnseitig von der Filterpatrone 31 vorstehenden, etwa keilförmigen Spitzen S und die zwischen ihnen angeordneten Nuten N. Die geometrischen Abmessungen und Winkelstellungen dieser Spitzen S und Nutzen N zueinander ermöglichen wiederum unterschiedliche Kodierungen bzw. Fixierpunkte für das filterseitige Anschlusselement am tankseitigen Filteranschlusselement.

Die Spitzen können auch der Positionierung beim Einsetzen der Filterpatrone in den Tankanschlussstutzen dienen, insbesondere bei optisch nicht einsehbaren Anschlüssen, z.B. zur Vermeidung einer Beschädigung der Dicht- und/oder anderer Strukturen.

Insbesondere geeignet für eine Kodierung sind hierbei die Schlitzabstände und/oder die Schlitzbreiten und/oder die Breiten der Spitzen bzw. vorstehenden Flügel sowie ebenfalls deren Längen und/oder Abstände, die zu entsprechenden Strukturen am tankseitigen Filteranschlusselement korrespondieren müssen, um den Einsatz einer betriebsgemäß zugelassenen Filterpatrone zu ermöglichen.

Bei diesen korrespondierenden Kodier- und/oder Fixierstrukturen handelt es sich um am tankseitigen Filteranschlusselement ausgebildete Rippen R (Figur 39), deren Zusammenwirken mit den am filterseitigen Tankanschlusselement ausgebildeten Kodier- und/oder Fixierstrukturen N und S am besten in der Figur 40 erkennbar sind. Die Rippen R sind hierbei an einem das filterseitige Tankanschlusselement teilweise umschließenden, wandförmigen Sockel SO ausgebildet.

Die oben beschriebene Kodier- und/oder Fixierstruktur kann in einer davon abgewandelten Ausführungsform auch komplementär ausgebildet sein, also Nuten anstelle von Rippen und Rippen anstelle von Nuten. In einer weiter abgewandelten Ausführungsform ist durchaus aber auch eine gemischte oder kombinierte Kodier- und/oder Fixierstruktur durch Ausbilden von Nuten und Rippen an dem einen und/oder anderen tank- bzw. filterseitigen Anschlusselementes möglich.

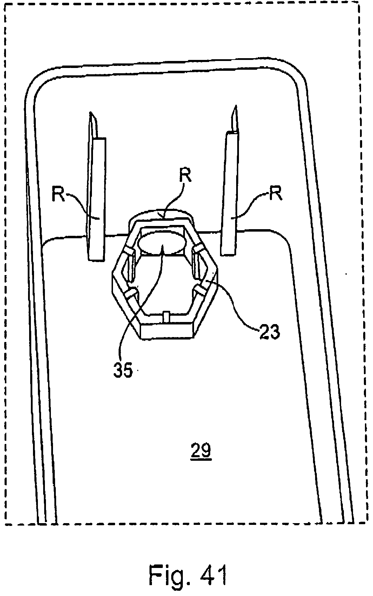

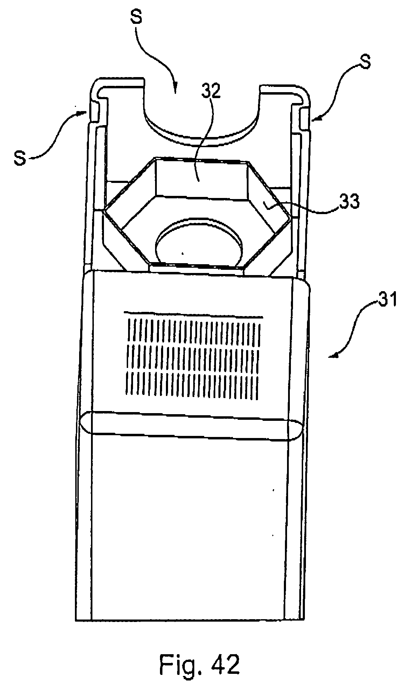

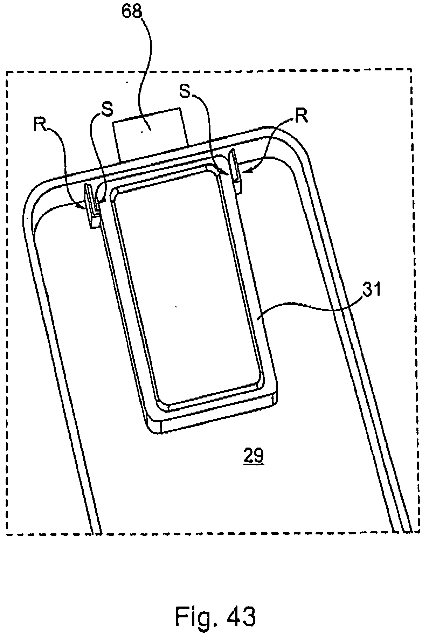

Die Figuren 41 bis 43 stellen eine weitere Ausführungsform dar, bei der der Filter 31 entlang an einer Tankwand angeordneten, zwei winkelig ausgebildete Rippen R aufweisenden und in zwei komplementäre Schlitze S eingreifenden Führung in das Innere des Tanks eingeschoben wird. Der Tank weist in seinem Boden 29 ein polygonförmiges, hier sechskantiges, Filteranschlusselement 23 und eine von innerhalb dieses Anschlusselementes durch die Tankwand nach außen führende Tankablauföffnung 35 auf.

Um einerseits eine ausreichende Wasserabfuhr durch diese wandseitig ausgebildete Tankablauföffnung 35 zu ermöglichen und andererseits eine möglichst vollständige Entleerung des Tanks, ist das polygonförmige Anschlusselement 23 als am Tankboden mit an seiner Oberseite abgeschrägten Polygon ausgebildet. Das filterseitige Tankanschlusselement 32 in der Form einer konisch ausgebildeten, ebenfalls polygonförmigen Formdichtung 32 weist eine entsprechend komplementär geneigte Anschlussfläche auf. Hierdurch kann die Filterpatrone 31 geführt und fixiert durch die Rippen R und komplementären Schlitze S senkrecht an der Tankwand nach unten in das Innere des Tanks eingeführt und formschlüssig und dichtend durch die so ausgebildete Kodierstruktur mit dem Tankboden zur Filterung des im Tank befindlichen Wassers eingesetzt werden.

Vorzugsweise kann auch bei dieser Ausführungsform, wie im Übrigen bei allen anderen Ausführungsformen auch, eine hier nicht dargestellte Bypassstruktur ausgebildet sein, um ein Verschneiden des gefilterten Wassers zu ermöglichen. Eine ergänzende rippenförmige Struktur R und eine komplementäre, schlitzförmige Kodierstruktur S ist hier durch die stirnseitige Ausnehmung S in der Filterwand und die komplementäre Form R der Auslassöffnung 35 im Bodenbereich der Tankwand ausgebildet. Auch diese können entsprechend abgeändert werden, z.B. in eine Vierkantform, eine Dreikantform oder andere sowie um weitere Ausnehmungen und/oder Vorsprünge aufweisende Struktur, zur Unterscheidung unterschiedlich zugelassener Filtertypen.

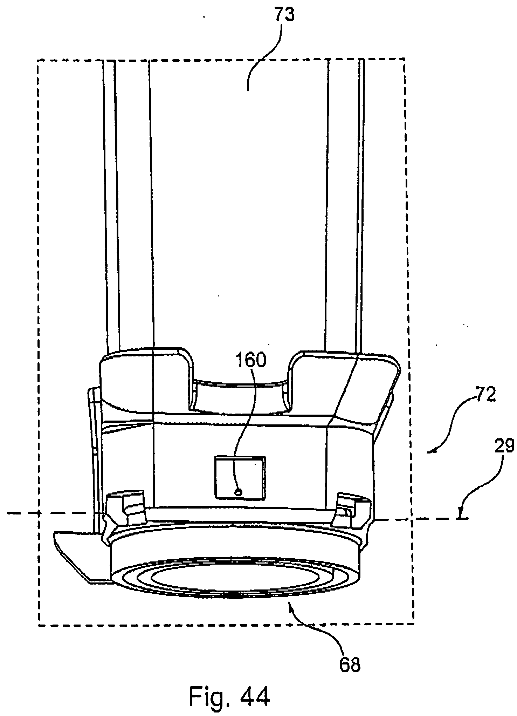

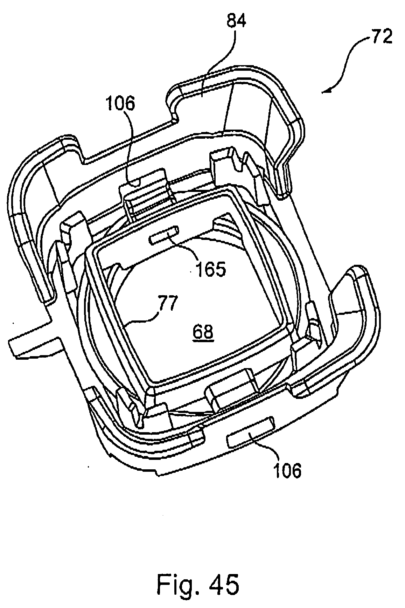

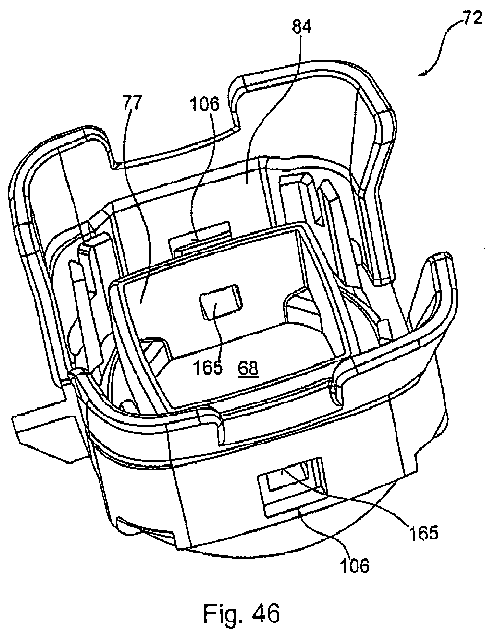

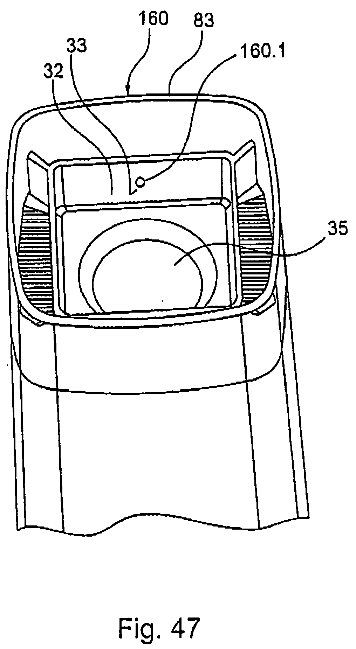

Eine weitere Ausführungsform einer Vierkant-Kodierung für einen Tank-Filter-Anschluss sind durch die Figuren 44 bis 47 dargestellt. Diese Ausführungsform weist zusätzlich zu den in den Figuren 6 bis 17 dargestellten Ausführungsformen eine Bypassstruktur auf. Diese Bypassstruktur weist in der stirnseitigen Gehäuseverlängerung der Filterpatrone 73 eine Öffnung in der Form einer Bohrung 129 auf, die in Überdeckung mit einer in einem tankseitigen Filtersockel-Anschlusselement 77 ausgebildeten Öffnung 165 den Durchfluss von im Tank befindlichen Rohwasser hin zum tankseitigen Geräteanschluss im Ablaufbereich des Tanks zur Beimischung zu dem durch die Filterpatrone gefilterten Wasser ermöglicht. Hierbei ist filterseitig die Bypassöffnung 129 in der stirnseitigen Verlängerung des Filters ausgebildet und realisiert eine Verschnittvorrichtung in Kombination mit dem tankseitigen Filteranschlusselement 77.

Eine weitere Möglichkeit zur Realisierung einer Verschnittvorrichtung könnte durch die Anordnung dieser Bypassöffnung 129 gegenüber einer in der Außenschale 51 ausgebildeten Öffnung 106 erreicht werden, wobei dann gegebenenfalls im Inneren der Filterpatrone und/oder im Inneren des tankseitigen Anschlusselementes eine entsprechende Kanalführung ausgebildet sein muss, um das so freigegebene Verschnittwasser dem durch die Filterpatrone aus deren Ausflussöffnung 35 ausfließenden, gefilterten Wassers beizumengen.

Eine weitere Verschnittstruktur kann durch die Ausbildung einer Bypassöffnung 129.1 im polygonförmigen, filterseitigen Tankanschlusselement 32, hier in der Form einer vierkantigen Formdichtung 32, realisiert werden, welche wiederum mit der im tankseitigen Filteranschluss 77 ausgebildeten Öffnung 165 korrespondiert. Die Größe der Öffnung 161.1 bestimmt hierbei wiederum die Verschnittmenge. In dieser Ausführungsform ist die Verschnittvorrichtung direkt im Dichtbereich des polygonförmig ausgebildeten Tank-Filter-Anschlusses realisiert.

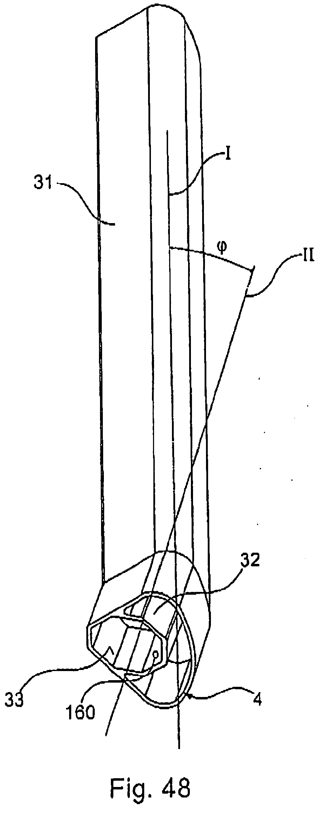

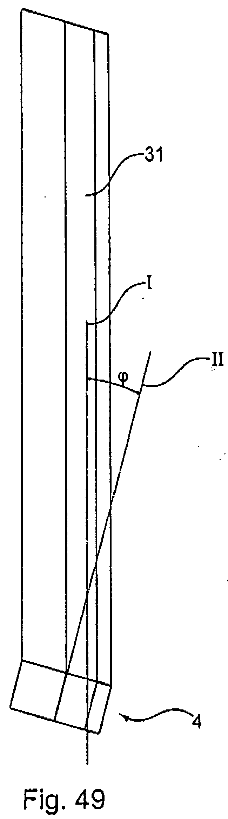

Die Figuren 48 und 49 zeigen eine Ausführungsform eines Tank-Filter-Anschlusses, bei dem eine durch das filterseitige Tankanschlusselement 4 verlaufende Längsachse II gegenüber einer durch das Gehäuse der Filterpatrone 31 verlaufenden Längsachse I schiefwinkelig ausgerichtet ist, hier vorzugsweise in einem spitzen Winkel ϕ. Diese schiefwinkelige oder auch gekröpfte oder auch abgeschrägte Ausrichtung des filterseitigen Tankanschlusselementes 4 gegenüber dem übrigen Filtergehäuse bildet eine weitere Form einer mechanischen Kodierung aus, die mit weiteren, bereits oben beschriebenen, Kodierungsformen kombinierbar ist, insbesondere mit einem hier dargestellten, polygonförmigen Anschlusselement in der Form eines Achtkantes. Dieser Achtkant ist ebenfalls als Formdichtung ausgebildet und kann, wie hier dargestellt, eine Bypass- bzw. Verschnittvorrichtung in der Form einer Öffnung 129 aufweisen, die bei Vorhandensein eines komplementären Elementes im tankseitigen Filteranschlusselement einen entsprechenden Verschnitt des zu filternden Wassers ermöglicht.

Die Figur 48 zeigt die Filterpatrone 31 in einer schrägen Ansicht von unten, bei der das filterseitige Anschlusselement 4 und dessen wesentliche Merkmale zu erkennen sind. Demgegenüber zeigt die Figur 49 eine Seitenansicht, bei der die Abwinkelung zwischen dem Patronengehäuse 31 und dem filterseitigen Tankanschluss 4 für einen beispielhaft dargestellten Winkel gezeigt ist.

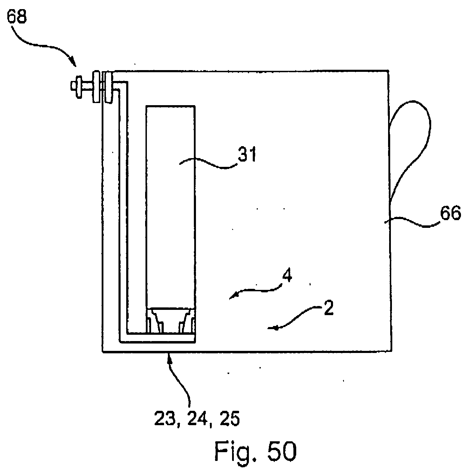

Die Figur 50 zeigt eine weitere Ausführungsform, bei der der Tank 66 wiederum als Einschubtank ausgebildet ist, in welchem eine Patrone 31 zur Filterung des darin enthaltenen Wassers an einem tankseitigem Filteranschlusselement 2 angeschlossen ist.

Dieses tankseitige Anschlusselement 2 ist über eine Leitung, hier vorzugsweise in der Form eines stabilen Rohres, mit dem tankseitigen Geräteanschluss 68 verbunden. Dieser tankseitige Geräteanschluss 68 ist vom betriebsgemäßen bodenseitigen Bereich des Tankes 66 beabstandet vom Tankinneren nach außen geführt. In dieser Ausführungsform ist der Geräteanschluss 68 beispielhaft in einer in der Oberkante einer Tankwand eingelassenen Aufnehmung fixiert, die in vorteilhafter Weise als lösbare Verbindung ausgebildet sein kann, so dass ein einfaches Entnehmen und Reinigen ermöglicht wird.

Der Betrieb des Tankes ist durch einfaches Einschieben in eine entsprechend ausgebildete Aufnahme eines Gerätes möglich, bzw. dessen Befüllen mit frischem, anschließend durch den Filter 31 zu filterndes Wasser durch Herausziehen. Das tankseitige Filteranschlusselement 2 kann hierbei alle oben beschriebenen Kodierungs- und/oder Fixierungs- und/oder Dichtungsmerkmale aufweisen, so dass auch in dieser zweiten Schubladen-Ausführungsform zuverlässig die Verwendung einer nicht betriebsgemäß vorgesehenen Filterpatrone ausgeschlossen werden kann, was im Übrigen auch für die Ausführung nach den Figuren 41 bis 43 gilt.

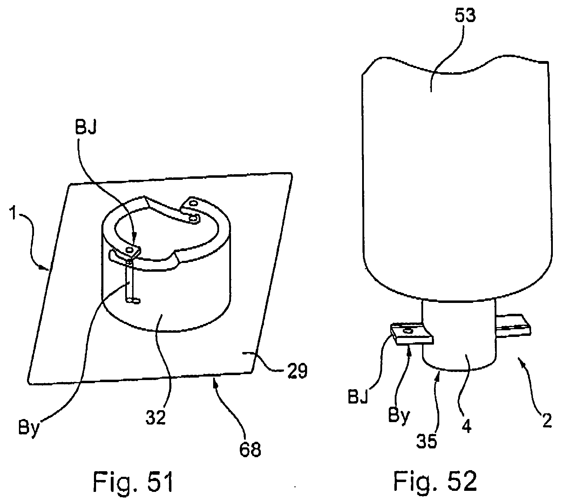

Zwei weitere Ausführungsmöglichkeiten bezüglich einer Bypasskonfiguration zwischen einem tankseitigen Filteranschlusselement 1 und einem filterseitigen Tankanschlusselement 2 sind in den Figuren 51 bis 54 dargestellt. Die Figuren 51 und 52 zeigen hier, nicht erfindungsgemäß, beispielhaft und schematisch eine Bypassanordnung BY, die einen Verschnitt zwischen durch die Filterpatrone 53 gefiltertem Wasser und einem nicht oder anderweitig gefiltertem oder aufbereitetem Wasser ermöglicht. Die Bypass- oder Verschnittstrecke BY ist in dieser Ausführungsform mit einem Bajonettverschluss BJ derart kombiniert, dass in einem Bajonettflügel BJ eine Öffnung BY vorgesehen ist, die mit einer weiteren, an einem zum Bajonettflügel komplementären Bajonettschlitz BJ angeordneten weiteren Bypassöffnung BY derart korrespondiert, dass bei betriebsgemäß eingesetzter Filterpatrone eine entsprechende Bypassführung realisiert wird. In der hier dargestellten Ausführungsform ist die im tankseitigen Filteranschlusselement 1 gezeigte Bypassöffnung BY vom stirnseitigen Anschlussbereich des tankseitigen Anschlusssockels bis unterhalb der Stelle geführt, in welcher der filterseitige Tankanschlussstutzen 4 in betriebsgemäß eingesetzter Position endet, so dass das am Filterbett der Filterpatrone 53 vorbeigeführten Bypasswasser mit dem durch das Filterbett der Filterpatrone 53 filtrierten Wasser vermischt und dem tankseitigen Geräteanschluss 68 zugeführt wird.

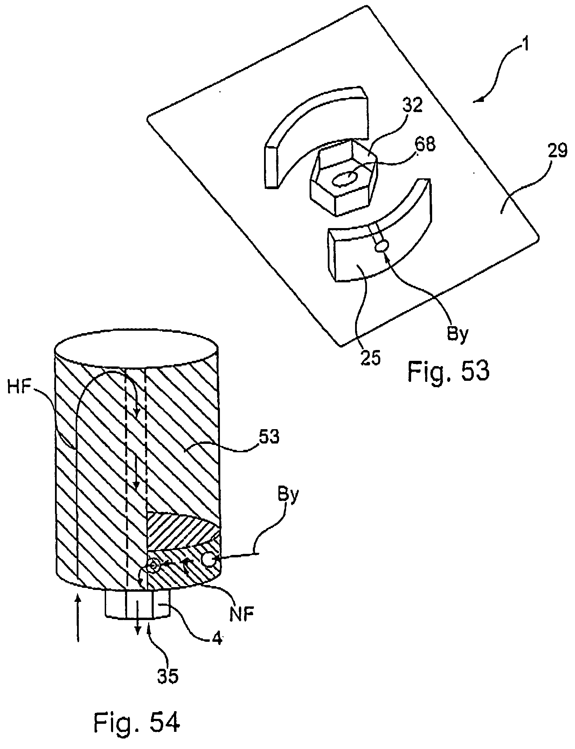

Die Figuren 53 und 54 zeigen eine demgegenüber abgewandelte Ausführungsform, dass die Bypassstrecke BY über eine von einem Hauptfilterbett HF der Filterpatrone 53 separate Aufbereitungs- und/oder Filterstrecke geführt wird, die hier beispielhaft und symbolisch als Nebenfilterstrecke NF dargestellt ist. Diese zweite Aufbereitungs- und/oder Filterstrecke NF kann z.B. eine Aktivkohlefilterstrecke und/oder andere Aufbereitungsmechanismen und/oder -medien enthalten. Nach Durchfließen dieser Nebenfilterstrecke NF wird das über diese Bypassstrecke BY geführte Wasser mit dem durch die Filterstrecke EF der Filterpatrone 53 filtrierte Wasser vermischt, so dass es ebenfalls durch den tankseitigen Geräteanschluss 68 entnommen werden kann.

In der in Figur 54 gezeigten Ausführungsform der Filterpatrone 53 ist die Zusammenführung der beiden separat über den Hauptfilter HF und über den Nebenfilter NF geführten bzw. aufbereiteten Wasserstrecken im Inneren der Filterpatrone 53 durch eine Einmündung in die innere Fallleitung der Filterpatrone 53 beispielhaft und schematisch dargestellt. In einer abgewandelten Ausführungsform kann durchaus aber ergänzend oder alternativ auch eine eigene Auslassöffnung aus der Filterpatrone heraus in Richtung zum tankseitigen Geräteanschluss 68 vorgesehen sein, wobei gegebenenfalls für alle drei Ausführungsformen gelten kann, dass sie alle innerhalb des tankseitigen Filteranschlussstutzens 32 münden, so dass, wiederum beispielhaft, eine Abdichtung durch einen Formschluss der beiden polygonförmigen Anschlusselemente des Tanks und des Filters möglich sind.

Die Einleitung des Bypassstroms in die Nebenfilterstrecke ist nur dann möglich, wenn die ebenfalls als Kodierung fungierende Öffnung BY an dem axial vom Tankboden 29 hoch stehenden Verschlüsselungselement 25 mit der entsprechenden filterseitigen Bypassöffnung BY im betriebsgemäß vorgesehenen Zustand eingesteckt ist. Ist keine Überdeckung dieser beiden Öffnungen gegeben, so kann kein entsprechender Verschnitt realisiert werden. Der tankseitige Filteranschluss 1 entsprechend der Figur 53 ist ebenfalls nur schematisch und beispielhaft dargestellt und kann mit unterschiedlichsten Varianten der oben bereits beschriebenen Kodier- und Anschlussstruktur versehen sein, so dass gegebenenfalls nur eine einzige von allen sechs hier möglichen Winkelausrichtungen für einen zulässigen Filterabschluss freigeschaltet ist. Von der Darstellung solcher Kodierstrukturen wurde an dieser Stelle aus Gründen der Übersichtlichkeit abgesehen.

Grundsätzlich gilt auch für diese Ausführungsformen in den Figuren 51 bis 54, dass auch sie mit allen oben beschriebenen Kodierungs- und/oder Fixierungs- und/oder Dichtstrukturen und/oder kombiniert werden können.

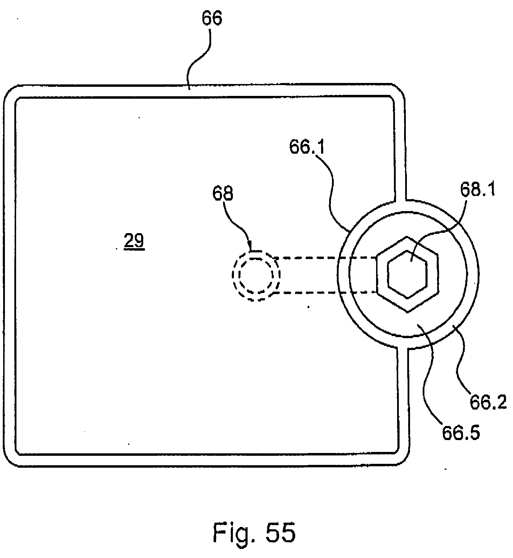

Die Figuren 55 bis 57 zeigen zwei weitere Ausführungsformen eines Tanks, bei denen die Filterpatrone außerhalb des Hauptgefäßes des Tanks 66 aber weiterhin, wie bisher beschrieben, zwischen dem tankseitigen Filteranschlusselement 1 und einem tankseitigem Geräteanschluss 68 angeordnet ist, um im Tank bevorratetes Rohwasser vor der Zufuhr an eine Entnahmestelle bzw. ein entsprechend angeschlossenes Gerät mit oder auch ohne Verschnitt zu filtern.

Die Figur 55 zeigt hierbei eine Draufsicht auf einen Tank 66, dessen Tankwand 66.1 zusammen mit einer weiteren Tankwand 66.2 ein Gehäuse 66.5 zur Aufnahme einer entsprechend geformten Filterpatrone 31 ausbildet und flüssigkeitsleitend mit dem Inneren des Tanks verbunden ist. Im Bodenbereich des Gehäuses 66.5 ist ein tankseitiges Filteranschlusselement 1 gezeigt, hier beispielhaft als kodierte Anschlussstruktur in der Form einer Polygonkontur. Im Inneren dieses tankseitigen Filteranschlussalementes 1 ist eine Abflussöffnung 68.1 zur Verbindung an das tankseitige Geräteanschlusselement 68 vorgesehen.

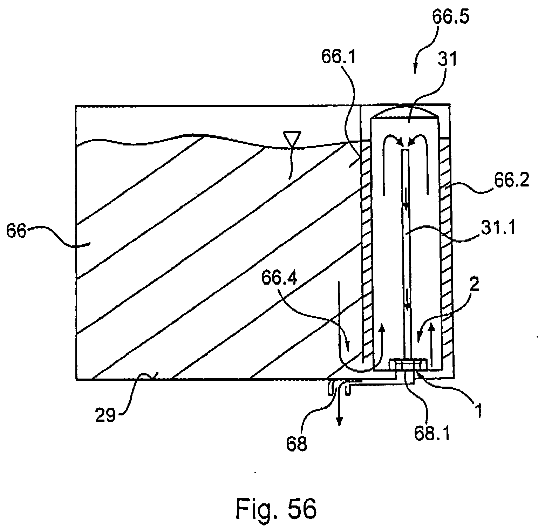

Die Figur 56 zeigt diesen Tank 66 in einer Schnittdarstellung quer durch das Filterpatronen-Aufnahmegehäuse 66.5 und die benachbarten Elemente des Tanks sowie die darunter ausgebildete Anschlussstruktur für das tankseitige Geräteanschlusselement 68. In dieser Ausführungsform könnte der Tank beispielsweise als Stecktank in ein entsprechend geeignet aufgebautes Geräte eingebaut werden. Die Zufuhr des im Inneren des Tanks 66 eingefüllten Wassers an die Filterpatrone 31 erfolgt durch eine Öffnung 66.4 in der Tankwand 66.2, die beispielsweise in der Form einer nicht vollständig bis zum Tankboden 29 reichenden Tankwand 66.1 ausgebildet sein kann. Das zu filternde Rohwasser steht somit im Inneren des durch die beiden Tankwände 66.1 und 66.2 gebildeten Filteraufnahme-Gehäuses 66.5 gleich hoch wie im Inneren des Wassertanks 66. Zur Darstellung des Filterstroms durch die Filterpatrone hindurch sind aus dem Inneren des Tanks 66 und von der Bodenseite der Filterpatrone 31 aufsteigend bis zur Oberkante einer hier beispielhaft als zentrales Abflussrohr gezeigten Abflussleitung, durch diese hindurch und abschließend aus dem tankseitigen Geräteanschluss 68 herausführend Fließpfeile eingezeichnet. Alle bisher in der Beschreibung oben dargelegten Merkmale hinsichtlich einer Kodierung und/oder einer Fixierung und/oder einer Dichtung und/oder die Verwendung eines Adapterstückes und/oder dergleichen mehr sind auch hier in vollem Umfang möglich bzw. gültig.

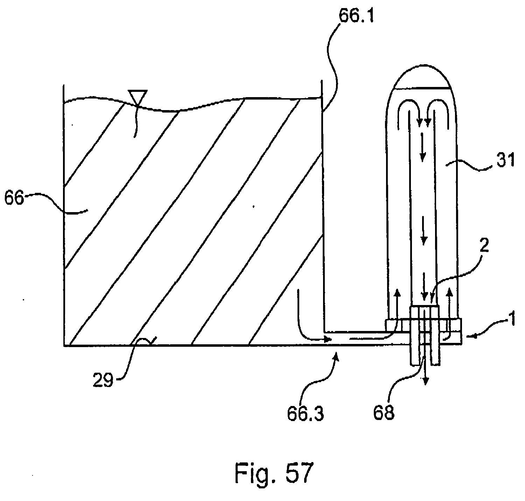

Die Figur 57 zeigt eine Ausführungsform, bei der die flüssigkeitsleitende Verbindung zwischen dem tankseitigen Filteranschlusselement 1 und dem filterseitigen Tankanschlusselement 2, nicht erfindungsgemäß, vollkommen außerhalb des Tanks 66 erfolgt. Hierzu ist der Tankboden 29 beispielhaft an einer Stelle gegenüber einer Tankwand 66.1 nach außen vorgezogen weitergebildet und zu einer geschlossenen Flüssigkeitsleitung 66.3 geformt, durch welche das im Inneren des Tanks 66 befindliche Wasser zu dem in dieser beispielhaft dargestellten Ausführungsform außerhalb des Tanks 66 ausgebildeten tankseitigen Filteranschlusselement 1 fließt. An diesem tankseitigen Filteranschlusselement 1 ist die Filterpatrone 31 mit ihrem filterseitigen Tankanschlusselement 2 angeschlossen. Auch für diese Ausführungsform gilt, dass alle bereits oben beschriebenen Merkmale hinsichtlich einer Kodier- und/oder Dicht- und/oder Fixier- und/oder Adapterstruktur in jeglicher Ausführungsvariante vorgesehen werden können bzw. Gültigkeit haben.

### Bezugszeichenliste:

- 1: Anschlusssockel
- 2: Tankanschlusselement
- 3 4: Anschlussstutzen
- 5 6: Seitenschlitz
- 23: Anschlusssockel
- 24: Dichtfläche
- 25: Außenschale
- 26: Sperrelement
- 27: Bodenrippe
- 28: Bodenrippe
- 29: Tankboden
- 30: Innenrippe
- 31: Filterpatrone
- 32: Formdichtung
- 33: Dichtfläche
- 34: Eintrittsschlitz
- 35: Abflussöffnung
- 36: Filterpatronengehäuse
- 37: Schnappelement
- 38: Aufnahme
- 39: Unterkante
- 40: Anschlag
- 41: Bodenöffnung
- 42: Nuten
- 43: Schlüsselelement
- 44: Tankanschlussbereich
- 45: Boden
- 46: Axialdichtung
- 47: Trennlinie
- 48: Scheibe
- 49: Ringschulter
- 50: Ventilkörper
- 51: Feder
- 52: Tankboden
- 53: Filterpatrone
- 54: Anschlusssockel
- 55: Außenfläche
- 56: Abflussleitung
- 57: Dichtung
- 58: Wand
- 59: Wand
- 60: Aussparung
- 61: Öffnung
- 62: Sockelwand
- 63: Sockelwand
- 64: Sockelwand
- 65: Bypassöffnung
- 66: Tank
- 67: Sauganschluss
- 68: Geräteanschluss
- 69: Längsachse
- 70: Zwischenraum
- 71: Rand
- 72: Anschlusselement
- 73: Patrone
- 74: Fuß
- 75: Einlauföffnung
- 76: Einlauföffnung
- 77: Anschlusssockel
- 78: Bodenplatte
- 79: Dichtfläche
- 80: Dichtfläche
- 81: Formdichtung
- 82: Auslauf
- 83: Außenwand
- 84: Außenschale
- 85: Adapter
- 86: Adapter

## Patentansprüche

1. Wasserfilterpatrone (31, 53) mit einem filterausgangsseitigen Anschlusselement (4, 57) zum Anschluss an ein Anschlusselement eines Wassertanks, **dadurch gekennzeichnet, dass** das filterausgangsseitige Anschlusselement eine, als Dichtfläche ausgebildete, innere Umfangsfläche (33) mit polygonförmiger Kontur aufweist, wobei das filterausgangsseitige Anschlusselement eine Formdichtung (32) bildet, deren Innenfläche die Dichtfläche (33) ausbildet, die fixierend und abdichtend an ein tankseitiges Filteranschlusselement aufgesteckt werden kann.

2. Wasserfilterpatrone nach Anspruch 1, **dadurch gekennzeichnet, dass** das filterausgangsseitige Anschlusselement zum Anschluss an eine komplementär ausgebildete Anschlussstruktur eines Wassertanks vorgesehen ist, die als tankseitiges Filteranschlusselement eine drehsymmetrische Umfangskontur aufweist.

3. Wasserfilterpatrone nach einem der vorhergehenden Ansprüche, **dadurch gekennzeichnet, dass** das filterausgangsseitige Anschlusselement zum Anschluss an eine komplementär ausgebildete Anschlussstruktur eines Wassertanks vorgesehen ist,
die als tankseitiges Filteranschlusselement (23) eine Umfangsform (24) mit einer geradzahligen Polygonkontur aufweist.

4. Wasserfilterpatrone nach einem der vorgenannten Ansprüche, **dadurch gekennzeichnet, dass** das filterausgangsseitige Anschlusselement zum Anschluss an eine komplementär ausgebildete Anschlussstruktur eines Wassertanks vorgesehen ist,
die als tankseitiges Filteranschlusselement (23) eine Umfangsform (24) mit einer ungeradzahligen Polygonkontur aufweist.

5. Wasserfilterpatrone nach einem der vorgenannten Ansprüche, **dadurch gekennzeichnet, dass** die Umfangsfläche des filterseitigen Anschlusselementes eine in axialer Richtung sich erstreckende Querschnittsverjüngung aufweist.

6. Wasserfilterpatrone nach Anspruch 5, **dadurch gekennzeichnet, dass** die Umfangsfläche des filterseitigen Anschlusselementes eine sich in axialer Richtung erstreckende Querschnittsform nach Art eines Pyramidenstumpfes aufweist.

7. Wasserfilterpatrone nach einem der vorgenannten Ansprüche, **dadurch gekennzeichnet, dass** am filterseitigen Tankanschlusselement (2) eine Bypassstruktur (29, 65) zur Einstellung eines Verschnittverhältnisses zwischen gefiltertem und ungefiltertem Wasser vorgesehen ist.

8. Wasserfilterpatrone nach einem der vorgenannten Ansprüche, **dadurch gekennzeichnet, dass** zur Realisierung einer Verschnittvorrichtung Öffnungen (60; 129, 129.1) und/oder Kanäle in der Filterpatrone ausgebildet sind.

9. Wasserfilterpatrone nach einem der vorgenannten Ansprüche, **dadurch gekennzeichnet, dass** ein Adapter (85) als ein zwischen tank- und filterseitigem Anschlusselement zwischengefügter Anschluss vorgesehen ist.

10. Wasserfilterpatrone nach einem der vorhergehenden Ansprüche, **dadurch gekennzeichnet, dass** das filterausgangsseitige Anschlusselement (4) als Ausnehmung zur Aufnahme eines korrespondierenden Anschlusselementes ausgebildet ist.

11. Wasserfilterpatrone nach einem der vorhergehenden Ansprüche, **dadurch gekennzeichnet, dass** die Dichtfläche (33) in Bezug auf eine durch das filterausgangsseitige Anschlusselement (4) verlaufende Längsachse radial und/oder auch in einem Winkel zu dieser Achse ausgerichtet ist.

## Claims

1. Water filter cartridge (31, 53) with a filter output side connecting element (4, 57) for connection to a connecting element of a water tank, **characterized in that** the filter output side connecting element comprises an inner circumferential surface (33) having a polygonal contour forming a sealing surface, wherein the filter output side connecting element is a shaped seal (32), whose inner surface forms the sealing surface (33) which can be fixed and sealingly attached to a tank-side filter connecting element.

2. Water filter cartridge according to claim 1, **characterized in that** the filter output-side connecting element is provided for connection to a complementarily configured connecting structure on the water tank, wherein the tank-side filter connecting structure comprises a rotationally symmetrical peripheral contour.

3. Water filter cartridge according to any one of the preceding claims, **characterized in that** the filter output-side connecting element is provided for connection to a complementarily configured connecting structure of a water tank, wherein the later comprises as the tank-side filter connecting element (23) a peripheral shape (24) with an even-numbered polygonal contour.

4. Water filter cartridge according to any one of the preceding claims, **characterized in that** the filter output-side connecting element is provided for connection to a complementarily configured connecting structure of a water tank, wherein the later comprises as the tank-side filter connecting element (23) a peripheral shape (24) with an odd-numbered polygonal contour.

5. Water filter cartridge according to any one of the preceding claims, **characterized in that** the peripheral surface of the filter-side connecting element has a cross-sectional taper extending axially.

6. Water filter cartridge according to claim 5 **characterized in that** the peripheral surface of the filter-side connecting element comprises a cross-sectional shape in the manner of a truncated pyramid extending in the axial direction.

7. Water filter cartridge according to any one of the preceding claims, **characterized in that** the filter-side tank connecting element (2) is provided with a bypass structure (29, 65) for adjusting a blending ratio between the filtered and unfiltered water.

8. Water filter cartridge according to any one of the preceding claims, **characterized in that** openings (60; 129, 129.1) and/or channels are formed in the filter cartridge to form a blending apparatus.

9. Water filter cartridge according to one of the preceding claims, **characterized in that** an adapter (85) is provided as an intermediate connection between the tank and filter side connecting element.

10. Water filter cartridge according to any one of the preceding claims, **characterized in that** the filter output-side connecting element (4) is formed as a recess for receiving a corresponding connecting element.

11. Water filter cartridge according to any one of the preceding claims, **characterized in that** the sealing surface (33) extends radially with respect to a longitudinal axis through the filter output-side connecting element (4) and/or is oriented at an angle to this axis.

## Revendications

1. Cartouche de filtrage d'eau (31, 53) avec un élément de raccordement (4, 57) du côté de la sortie du filtre pour le raccordement à l'élément de raccordement d'un réservoir d'eau, **caractérisée en ce que** l'élément de raccordement du côté de la sortie du filtre présente une surface périphérique (33) interne conçue comme une surface d'étanchéité, avec un contour polygonal, l'élément de raccordement du côté de la sortie du filtre constituant un joint d'étanchéité moulé (32) dont la surface interne constitue la surface d'étanchéité (33) et peut être emboîté de manière étanche à un élément de raccordement de filtre du côté du réservoir.

2. Cartouche de filtrage d'eau selon la revendication 1, **caractérisée en ce que** l'élément de raccordement du côté de la sortie du filtre est conçu pour le raccordement à une structure de raccordement complémentaire d'un réservoir d'eau, qui présente, en tant qu'élément de raccordement de filtre du côté du réservoir, un contour périphérique à symétrie de rotation.

3. Cartouche de filtrage d'eau selon l'une des revendications précédentes, **caractérisée en ce que** l'élément de raccordement du côté de la sortie du filtre est conçu pour le raccordement à une structure de raccordement complémentaire d'un réservoir d'eau, qui présente, en tant qu'élément de raccordement de filtre (23) du côté du réservoir, une forme périphérique (24) avec un contour polygonal pair.

4. Cartouche de filtrage d'eau selon l'une des revendications précédentes, **caractérisée en ce que** l'élément de raccordement du côté de la sortie du filtre est conçu pour le raccordement à une structure de raccordement complémentaire d'un réservoir d'eau, qui présente, en tant qu'élément de raccordement de filtre (23) du côté du réservoir, une forme périphérique (24) avec un contour polygonal impair.

5. Cartouche de filtrage d'eau selon l'une des revendications précédentes, **caractérisée en ce que** la surface périphérique de l'élément de raccordement du côté du filtre présente un rétrécissement de section transversale qui s'étend dans la direction axiale.

6. Cartouche de filtrage d'eau selon la revendication 5, **caractérisée en ce que** la surface périphérique de l'élément de raccordement du côté du filtre présente une forme de section transversale qui s'étend dans la direction axiale à la manière d'un tronc de pyramide.

7. Cartouche de filtrage d'eau selon l'une des revendications précédentes, **caractérisée en ce que**, sur l'élément de raccordement au réservoir (2) du côté du filtre, se trouve une structure de bypass (29, 65) pour le réglage d'un rapport de mélange entre l'eau filtrée et l'eau non filtrée.

8. Cartouche de filtrage d'eau selon l'une des revendications précédentes, **caractérisée en ce que**, pour la réalisation d'un dispositif de mélange, sont réalisées des ouvertures (60 ; 129, 129.1) et/ou des canaux dans la cartouche filtrante.

9. Cartouche de filtrage d'eau selon l'une des revendications précédentes, **caractérisée en ce qu'**un adaptateur (85) est conçu comme un raccord inséré entre l'élément de raccordement du côté du réservoir et du côté du filtre.

10. Cartouche de filtrage d'eau selon l'une des revendications précédentes, **caractérisée en ce que** l'élément de raccordement (4) du côté de la sortie du filtre est conçu comme un évidement pour le logement d'un élément de raccordement correspondant.

11. Cartouche de filtrage d'eau selon l'une des revendications précédentes, **caractérisée en ce que** la surface d'étanchéité (33) est orientée radialement par rapport à un axe longitudinal s'étendant à travers l'élément de raccordement (4) du côté de la sortie du filtre et/ou également inclinée avec un angle par rapport à cet axe.
